# EUROPÄISCHE PATENTSCHRIFT

(11) **EP 4 335 330 B1**
(45) Veröffentlichungstag und Bekanntmachung des Hinweises auf die Patenterteilung: **06.11.2024**
(21) Anmeldenummer: 23192804.5
(22) Anmeldetag: 22.08.2023
(51) Int. Cl.: F24C 14/00, A47J 27/14, B05B 3/02, B05B 3/04, A47J 31/60

(54) **GEWERBLICHES GARGERÄT**
INDUSTRIAL COOKING APPLIANCE
APPAREIL DE CUISSON INDUSTRIEL

(30) Priorität: 09.09.2022 DE 102022123068
(43) Veröffentlichungstag der Anmeldung: 13.03.2024
(73) Patentinhaber: MKN Maschinenfabrik Kurt Neubauer GmbH & Co. KG, 38300 Wolfenbüttel (DE)
(72) Erfinder: HÖRSTER, Kay, 38300 Wolfenbüttel (DE); KACZMARCZYK, Marian, 38300 Wolfenbüttel (DE)
(74) Vertreter: Berghofer, Benedikt

(56) Entgegenhaltungen:
- EP-B1- 1 275 334
- EP-B1- 2 724 082
- DE-A1- 10 134 005
- DE-A1- 102005 038 193

## Beschreibung

Die vorliegende Erfindung betrifft ein gewerbliches Gargerät, das einen Garraum, insbesondere in Form eines Tiegels, einen Deckel zum Verschließen des Garraums und eine Reinigungseinrichtung zum Reinigen des Garraums umfasst.

Bei derartigen Gargeräten kann ein Innenraum eines Tiegels den Garraum bilden, wie zum Beispiel bei tiegel-, pfannen- oder wannenförmigen Garräumen in Gargeräten, die zur Zubereitung von flüssigen, cremigen oder schüttfähigen Nahrungsmitteln, wie zum Beispiel Suppen, Gulasch, Eintöpfen, Pasta, Reis oder Gemüse, wie Erbsen, Karotten oder Bohnen, oder auch zum Braten von Nahrungsmitteln am Tiegelboden, wie zum Beispiel Eiern oder Fleisch, vorgesehen sind. Der Garraum kann durch den Deckel geschlossen werden, um eine ungewünschte Wärmeabfuhr aus dem Garraum zu vermeiden. Bei einigen entsprechend ausgestatteten Geräten wird dadurch zudem ein Druckgaren ermöglicht.

Derartige Gargeräte werden in gewerblichen Großküchen, wie zum Beispiel Kantinen oder Gaststätten, mit einem hohen Durchsatz von Speisen und Gerichten eingesetzt. Nach einem entsprechenden Zubereitungsvorgang von Speisen im Garraum bzw. Tiegel muss dieser, insbesondere aufgrund von Hygienevorschriften, gründlich gereinigt werden, was bei gewerblichen Gargeräten folglich entsprechend häufig der Fall ist.

Bei manueller Reinigung wird der Deckel des Tiegels aufgeklappt und der Garraum von einem Nutzer mittels einer Handbrause mit einer Reinigungsflüssigkeit beaufschlagt, die ein chemisches Reinigungsmittel beinhaltet und für einen gewissen Zeitraum gegebenenfalls unter Zufuhr von Wärme einwirken muss. Nach einer Einwirkzeit führt der Nutzer eine mechanische Reinigung, beispielsweise mittels Bürsten, durch und entfernt Reste der Speisen von den Garraumwänden. Danach ist der Garraum zu spülen, um die Reste der Waschflotte und insbesondere die Reinigungsflüssigkeit vollständig aus dem Garraum zu entfernen. Die manuelle Reinigung verbraucht einerseits große Mengen an Wasser und Reinigungsmittel und erfordert andererseits einen hohen Zeit- und Arbeitsaufwand durch den Nutzer, der in dieser Zeit zur Reinigung am Gargerät gebunden ist.

Reinigungseinrichtungen für Gargeräte mit wannenförmigem Garraum sehen teilweise Sprühdüsen oder Sprinkler zum Zuführen einer Reinigungsflüssigkeit in den Garraum und zum Benetzen der Garraumwände mit der Reinigungsflüssigkeit vor. Derartige Systeme, bei denen, wie in EP 1 275 334 A2 offenbart, eine Umwälzung der Reinigungsflüssigkeit bzw. Waschflotte erfolgt, müssen ferner Baugruppen zur Filterung der Reinigungslösung und ein Reservoir umfassen. Durch diesen aufwendigeren und teureren Aufbau kann der Nutzer zwar teilweise entlastet werden, eine mechanische Reinigung des Garraums durch den Nutzer entfällt jedoch in der Regel nicht.

Um diese Nachteile zu überwinden, offenbart die EP 2 724 082 A1 eine Reinigungseinrichtung für ein gattungsgemäßes Gargerät, bei dem Wasser unter Hochdruck über einen mit Düsen versehenen Reinigungskopf in den Garraum eingebracht wird. Durch die unter Hochdruck abgegebenen Wasserstrahlen kann der Garraum mit Wasser mechanisch gereinigt werden und es ist in der Regel nicht erforderlich, ein chemisches Reinigungsmittel beizumischen und einwirken zu lassen. Die Reinigung des Garraums kann zudem teilautomatisiert werden, da die intensive mechanische Reinigung durch den Nutzer entfällt.

Dennoch ist auch die in EP 2 724 082 A1 beschriebene Reinigungseinrichtung mit Nachteilen behaftet. Der mit Düsen versehene Reinigungskopf ist beispielsweise an einem Ende einer Lanze angeordnet, die mittels einer entsprechenden Kupplung an einer Rückwand des Tiegels anzubringen ist. Zum Garen von Nahrungsmitteln im Garraum ist die Lanze zu entnehmen und die Kupplung mit einem geeigneten Verschluss abzudecken. Die Lanze muss am Gargerät oder in der Nähe des Gargeräts verstaut werden, was zusätzlichen Bauraum beansprucht und den Nutzer bei Verwendung des Gargeräts behindern kann. Nach Beendigung des Garvorgangs ist der Verschluss mit einem Werkzeug abzunehmen und die Lanze herauszuholen und im Tiegel zu montieren. Je nach Geschicklichkeit des Nutzers nimmt die Montage und Demontage der Lanze mehr oder weniger Zeit in Anspruch, in der der Nutzer nicht für andere Tätigkeiten zur Verfügung steht. Aufgrund des häufigen Wechsels der Lanze kann es zudem zu Verschleißerscheinungen kommen, insbesondere an der Kupplung, auf die aufgrund des verwendeten Hochdrucks zudem hohe Kräfte wirken. Auch entsteht mit der Kupplung ein zusätzlicher Übergang, der entsprechend abzudichten ist, um die Förderung des Wassers unter Hochdruck bis zum Reinigungskopf zu gewährleisten, wobei auch die dafür vorgesehene Dichtanordnung anfällig für Verschleiß ist. Um den Reinigungskopf für eine zufriedenstellende Reinigung möglichst zentral im Garraum zu platzieren, ist die von der Rückwand ausgehende Lanze verhältnismäßig lang. Dies kann zu einem sogenannten Sprühschatten führen, in dem die abgegebenen Wasserstrahlen die Garraumwand nicht oder nicht mit ausreichendem Druck erreichen, wodurch an diesen Stellen gegebenenfalls eine manuelle Nachreinigung erforderlich sein kann.

Weiterer Stand der Technik ist der DE 101 34 005 A1 zu entnehmen.

Es ist daher eine Aufgabe der vorliegenden Erfindung, ein gewerbliches Gargerät mit Reinigungseinrichtung bereitzustellen, das bei zumindest gleichem oder besserem Reinigungsergebnis eine zunehmende Automatisierung des Reinigungsvorgangs und Entlastung des Nutzers sowie eine hohe Betriebssicherheit und geringen Verschleiß bzw. eine hohe Lebensdauer ermöglicht.

Diese Aufgabe wird durch ein gewerbliches Gargerät nach Anspruch 1 gelöst. Bevorzugte Ausführungsformen sind Gegenstand der abhängigen Ansprüche.

Ein erfindungsgemäßes gewerbliches Gargerät umfasst einen Garraum, insbesondere in Form eines Tiegels, einen Deckel zum Verschließen des Garraums und eine Reinigungseinrichtung zum Reinigen des Garraums, die als Hochdruckeinrichtung ausgebildet ist und zum Zuführen eines Reinigungsfluids, insbesondere von Wasser, in den Garraum unter Hochdruck eingerichtet ist. Die Reinigungseinrichtung umfasst einen Reinigungskopf, der mittels einer Lageranordnung am Deckel drehbar gelagert ist. Die Lageranordnung umfasst einen Lagerkörper, eine Drehwelle, ein erstes Dichtelement und ein zweites Dichtelement. Innerhalb des Lagerkörpers ist eine Fluidkammer ausgebildet, die mit einer Fluidquelle für das Reinigungsfluid verbunden ist. Die Drehwelle ist um eine erste Drehachse drehbar im Lagerkörper gelagert und erstreckt sich durch die Fluidkammer, wobei die Drehwelle in einer axialen Richtung bezüglich der Fluidkammer auf einer ersten Seite einen ersten Endabschnitt aufweist, an dem der Reinigungskopf drehfest gelagert ist. Das erste und das zweite Dichtelement sind in axialer Richtung der Drehwelle bezüglich der Fluidkammer auf einer zweiten Seite der Drehwelle angeordnet, umgeben die Drehwelle und sind in axialer Richtung der Drehwelle beabstandet zueinander angeordnet. Zwischen dem ersten und dem zweiten Dichtelement umfasst die Lageranordnung eine Ablassöffnung zum Abführen von Reinigungsfluid aus einem Zwischenraum zwischen dem ersten und dem zweiten Dichtelement.

Auf diese Art und Weise wird ein Gargerät bereitgestellt, bei dem der drehbare Reinigungskopf der Hochdruck-Reinigungseinrichtung am Deckel gelagert ist, wobei die Zufuhr des Reinigungsfluids über die Lageranordnung besonders gut abgedichtet ist. Dies bringt mehrere Vorteile mit sich, wie nachfolgend beschrieben.

Grundsätzlich sollten das erste und das zweite Dichtelement so ausgelegt sein, dass ein Dichtelement ausreicht, um den Austritt von Reinigungsfluid aus dem Bereich der Fluidkammer entlang der Drehwelle zu vermeiden. Durch ein zweites Dichtelement sowie die zwischen dem ersten und dem zweiten Dichtelement vorgesehene Ablassöffnung wird sichergestellt, dass auch in dem Fall, in dem dennoch Reinigungsfluid das von der Fluidkammer aus betrachtet nächstgelegene Dichtelement zum Beispiel aufgrund von Verschleiß überwindet, dieses Reinigungsfluid zuverlässig abgefangen und kontrolliert abgeführt werden kann. Dadurch kann der Eintritt von Reinigungsfluid in einen Innenraum des Deckels unterbunden werden. Dies ist insbesondere aufgrund der Beweglichkeit des Deckels, die zu einer unkontrollierten Verteilung ausgetretenen Reinigungsfluids im Deckel führen würde, sowie der im Deckel zur Lagerung und gegebenenfalls zum Antrieb des Reinigungskopfs vorgesehenen Komponenten von besonderem Vorteil. Sowohl das Reinigungsfluid an sich als auch dadurch bedingte Korrosion können schädlich für den Deckel selbst sowie für die darin aufgenommenen Komponenten, wie zum Beispiel die Lageranordnung, sein. Beides kann vorteilhafterweise somit vermieden werden. Folglich kann die Ausfallsicherheit des Dichtungssystems und dadurch die Betriebssicherheit und Langlebigkeit des Gargeräts erhöht werden.

Das erste und das zweite Dichtelement umgeben die Drehwelle vollständig und liegen zumindest im Betrieb des Gargeräts dichtend an der Drehwelle an. Das erste und das zweite Dichtelement dichten die Lageranordnung ausgehend von der Fluidkammer zur zweiten Seite bzw. zum zweiten Endabschnitt der Drehwelle hin ab. In einer bevorzugten Ausführungsform umfasst die Lageranordnung weiterhin ein drittes Dichtelement, das in axialer Richtung der Drehwelle bezüglich der Fluidkammer auf der ersten Seite der Drehwelle angeordnet ist und die Drehwelle umgibt. Das dritte Dichtelement kann grundsätzlich ausgebildet sein wie das erste und das zweite Dichtelement. Das dritte Dichtelement dichtet die Lageranordnung zur ersten Seite bzw. zum ersten Endabschnitt der Drehwelle hin ab. So wird sichergestellt, dass kein Reinigungsfluid von der Fluidkammer aus entlang der Drehwelle unkontrolliert aus der Lageranordnung austritt.

Das erste und das zweite Dichtelement sowie gegebenenfalls das dritte Dichtelement können beispielsweise als Dichtring, insbesondere als Wellendichtring ausgebildet sein. Ferner sind das erste und das zweite Dichtelement sowie gegebenenfalls das dritte Dichtelement vorzugsweise koaxial zueinander sowie zur Drehwelle angeordnet.

Bevorzugt sind das zweite Dichtelement und, falls vorhanden, dass dritte Dichtelement als Hochdruck-Dichtungen ausgebildet, insbesondere als vorgespannte Hochdruck-Dichtungen. Da das zweite und das dritte Dichtelement benachbart zur Fluidkammer angeordnet sind, wird dadurch eine besonders wirkungsvolle Abdichtung geschaffen. Das erste Dichtelement ist vorzugsweise als Niederdruck-Dichtung ausgebildet. Sie ist dadurch leichter zu montieren und auch im statischen Zustand dicht.

Eine zuverlässige Abfuhr von Reinigungsfluid aus dem Zwischenraum kann erreicht werden, wenn die Ablassöffnung im Wesentlichen senkrecht zur ersten Drehachse ausgerichtet ist und einen Durchmesser aufweist, der zwischen 1 mm und 4 mm, vorzugsweise zwischen 2 mm und 3 mm beträgt. Zum Beispiel kann die Ablassöffnung als eine Bohrung mit entsprechendem Durchmesser und entsprechender Ausrichtung ausgebildet sein. In einer Ausführungsform der vorliegenden Erfindung umfasst die Lageranordnung ein Ablauf-Einsatzelement, das die Ablassöffnung aufweist und in den Lagerkörper eingesetzt ist. Dies ermöglicht zum einen eine leichte Herstellung und Montage, zum anderen können definierte Anlageflächen für zumindest das erste und/oder das zweite Dichtelement bereitgestellt werden. Bevorzugt liegt das erste und/oder das zweite Dichtelement an dem Ablauf-Einsatzelement dichtend an. Mit anderen Worten ist das Ablauf-Einsatzelement vorzugsweise in axialer Richtung zwischen dem ersten und dem zweiten Dichtelement aufgenommen. Hierzu kann das Ablauf-Einsatzelement zumindest einen umlaufenden Sitz, z.B. in Form einer Nut, zur Aufnahme des jeweiligen Dichtelements aufweisen, das dichtend anliegt.

Das Ablauf-Einsatzelement umgibt die Drehwelle vorzugsweise vollständig, liegt an dieser an und weist die Ablassöffnung in Form einer Bohrung und/oder umlaufenden Nut auf. Zum Beispiel weist das Ablauf-Einsatzelement eine bezüglich der ersten Drehachse radiale Bohrung als Ablassöffnung auf, die das Ablauf-Einsatzelement vollständig durchdringt. Zudem kann das Ablauf-Einsatzelement entlang der Drehwelle eine umlaufende Nut aufweisen, die die Drehwelle vollständig umgibt, sodass Reinigungsfluid um die Drehwelle herum zur Ablassöffnung gelangen kann.

In einer Ausführungsform umfasst die Lageranordnung vorzugsweise ein Kammer-Einsatzelement, das in den Lagerkörper eingesetzt ist und einen Hohlraum aufweist, der die Fluidkammer bildet und die Drehwelle umgibt. Dies ermöglicht zum einen eine leichte Herstellung und Montage der Fluidkammer, zum anderen können definierte Anlageflächen für zumindest das zweite und/oder das dritte Dichtelement bereitgestellt werden. Hierzu kann das Kammer-Einsatzelement zumindest einen umlaufenden Sitz, z.B. in Form einer Nut, zur Aufnahme des jeweiligen Dichtelements aufweisen, das dichtend anliegt. Das Kammer-Einsatzelement kann in axialer Richtung bezüglich der ersten Drehachse eine erste und eine zweite Öffnung aufweisen, durch die sich die Drehwelle erstreckt. Zudem kann das Kammer-Einsatzelement in radialer Richtung bezüglich der ersten Drehachse eine dritte Öffnung aufweisen, die in Fluidverbindung mit einer Fluidquelle für das Reinigungsfluid steht.

In einer besonders bevorzugten Ausführungsform umfasst das Gargerät eine Antriebseinrichtung mit einem Motor zum rotatorischen Antreiben des Reinigungskopfs, wobei der Motor im Innenraum des Deckels aufgenommen ist. Durch die Aufnahme des Motors im Deckel zusammen mit der Lageranordnung des Reinigungskopfs kann auf eine komplexe Drehmoment-Übertragungseinrichtung zum Übertragen des Drehmoments in den Deckel und auf den Reinigungskopf verzichtet werden. Das Dichtsystem umfassend das erste und das zweite Dichtelement sowie die Ablassöffnung bewirkt zugleich, dass der Motor zuverlässig vor Feuchtigkeit durch austretendes Reinigungsfluid geschützt ist. Dies trifft auch auf zumindest eine Versorgungsleitung zu, die zur Versorgung des Motors mit Strom und/oder Steuersignalen im Deckel zum Motor verlaufen kann.

Durch den rotatorischen Antrieb des Reinigungskopfs durch den Motor in Verbindung mit der Zuführung des Reinigungsfluids, insbesondere des Wassers, unter Hochdruck können Speise-Rückstände im gesamten Garraum mechanisch entfernt werden, wodurch das Reinigungsergebnis zumindest beibehalten werden kann. Eine manuelle Reinigung und der Zusatz eines chemischen Reinigungsmittels sind nicht erforderlich. Im Rahmen der Erfindung ist das Reinigungsfluid daher bevorzugt Wasser. Dem Wasser sind dann keine (Reinigungs-) Zusätze beigemischt.

Der Motor ist vorzugsweise ein Elektromotor, insbesondere ein permanent-magneterregter Gleichstrommotor. Der Motor kann eine Länge in axialer Richtung einer Ausgangswelle des Motors aufweisen, die zwischen 80 mm und 200 mm, mehr bevorzugt zwischen 100 mm und 150 mm beträgt, sowie einen Durchmesser aufweisen, der zwischen 20 mm und 60 mm, mehr bevorzugt zwischen 30 mm und 50 mm beträgt. Trotz des stark limitierten Bauraums im Deckel des Gargeräts kann der Motor daher gut im Innenraum desselben aufgenommen werden. Der Motor wird bevorzugt mit einer Schutzkleinspannung nach IEC 60449 betrieben. Vorzugsweise beträgt eine Nennspannung des Motors dabei 24 V Gleichspannung. Eine Nennspannung von 12 V Gleichspannung wäre auch denkbar.

Unabhängig vom motorischen Antrieb des Reinigungskopfs, wird dieser aufgrund der Anordnung des Reinigungskopfs am Deckel beim Öffnen des Deckels automatisch aus dem Garraum und dessen Zugriffsöffnung bewegt, sodass er den Nutzer weder bei der Zugabe von Nahrungsmitteln in den Garraum noch bei der Entnahme von Nahrungsmitteln bzw. Speisen aus dem Garraum behindert. Beim Schließen des Deckels wird der Reinigungskopf automatisch im Garraum angeordnet, z.B. um einen Reinigungsvorgang starten zu können. Grundsätzlich ist der Reinigungskopf derart montiert, dass er der Unterseite des Deckels zugeordnet ist bzw. an der Unterseite angeordnet ist. Dabei kann der Reinigungskopf an einer die Unterseite bildenden Komponente, z.B. einem Verkleidungsteil des Deckels, oder einem die Unterseite des Deckels tragenden Rahmen des Deckels gelagert sein.

Das Gargerät kann ein Gehäuse umfassen, mit dem der Deckel schwenkbar verbunden ist und das den Garraum aufweist. Sowohl der Deckel als auch das Gehäuse können in an sich bekannter Weise jeweils einen Rahmen und eine Verkleidung aufweisen. Im Allgemeinen ist der Deckel zwischen einem geschlossenen Zustand, in dem er den Garraum verschließt und die Unterseite des Deckels den Garraum an einer Seite begrenzt, und einem geöffneten Zustand, in dem der Deckel die Zugriffsöffnung des Garraums freigibt, bewegbar, vorzugsweise um eine Schwenkachse schwenkbar. Der Deckel weist eine Oberseite, eine Unterseite und zumindest eine Seitenwand auf, die die Oberseite und die Unterseite miteinander verbindet, wobei die Oberseite, die Unterseite und die zumindest eine Seitenwand den Innenraum des Deckels definieren. Die Form des Deckels hängt im Wesentlichen von der Form des Garraums ab. Bei einem im Wesentlichen runden Garraum weist auch der Deckel eine im Wesentlichen runde Form auf und hat dann in der Regel nur eine umlaufende Seitenwand. Bei tiegel- oder wannenförmigen Garräumen weist der Deckel üblicherweise eine im Wesentlichen rechteckige Form mit vier Seitenwänden auf. Ist der Garraum in Form eines Tiegels ausgebildet, weist dieser vorzugsweise einen Boden und vier Wände auf, wobei eine hintere erste Wand und eine vordere zweite Wand einander gegenüberliegen und eine seitliche dritte Wand und eine seitliche vierte Wand einander gegenüberliegen, die den Garraum mit Ausnahme der durch den Deckel verschließbaren Zugriffsöffnung begrenzen. Der Garraum kann beheizbar sein, wobei im Fall eines Tiegels z.B. entsprechende Heizelemente in den Wänden und/oder dem Boden vorgesehen sein können. Durch mehrere in den Boden integrierte Heizelemente können abgegrenzte Garzonen ausgebildet sein, die separat angesteuert werden können, wodurch unterschiedliche Temperaturen der Garzonen eingestellt werden können.

Die Anordnung des Reinigungskopfs am Deckel ermöglicht weiterhin, dass der Reinigungskopf in einem nahezu beliebigen Abstand von den Wänden des Garraums angeordnet werden kann, ohne eine Länge einer Welle oder Lanze, die den Reinigungskopf trägt, zu verändern oder besonders lang zu gestalten. Im geschlossenen Zustand des Deckels ist der Reinigungskopf bevorzugt im Wesentlichen mittig zwischen der ersten und der zweiten Wand sowie im Wesentlichen mittig zwischen der zweiten und der dritten Wand angeordnet. Durch diese möglichst zentrale Anordnung des Reinigungskopfs am Deckel können alle Wände des Garraums gut gereinigt werden, ohne dass dazu eine verhältnismäßig lange Welle oder Lanze mit den eingangs geschilderten Nachteilen erforderlich wäre. "Im Wesentlichen mittig" soll dabei bedeuten, dass der Reinigungskopf von der exakten Mitte zwischen der ersten und der zweiten Wand bzw. zwischen der dritten und der vierten Wand um bis zu 10%, vorzugsweise um bis zu 5% des Abstands der jeweiligen Wände abweichen kann.

Vielmehr kann der Reinigungskopf relativ nah an der Unterseite des Deckels angeordnet sein, ohne das Reinigungsergebnis negativ zu beeinflussen, wodurch sich eine Welle oder eine Lanze kurz gestalten lassen und sich ein durch diese bedingter Sprühschatten minimieren oder eliminieren lässt. Ein Abstand zwischen einem Mittelpunkt des Reinigungskopfs und der Unterseite des Deckels beträgt vorzugsweise lediglich zwischen 15 mm und 50 mm, mehr bevorzugt zwischen 20 mm und 40 mm, noch mehr bevorzugt zwischen 25 mm und 30 mm. Der Reinigungskopf kann einen Durchmesser aufweisen, der zwischen 20 mm und 50 mm, vorzugsweise zwischen 30 mm und 40 mm beträgt.

Bei geschlossenem Deckel ist der Reinigungskopf im Garraum angeordnet. Für den Garraum kann ein maximaler Füllstand definiert sein, bis zu dem der Garraum zum Garen mit Nahrungsmitteln gefüllt werden darf. Der Reinigungskopf ist im geschlossenen Zustand des Deckels bevorzugt oberhalb des maximalen Füllstands im Garraum angeordnet. Dies wird durch die nahe Anordnung des Reinigungskopfs an der Unterseite des Deckels begünstigt.

Besonders vorteilhaft ist, dass der Reinigungskopf fest am Deckel montiert bleiben kann und während des Garvorgangs nicht entnommen werden muss. Allem voraus erspart dies dem Nutzer die Zeit und den Aufwand der Montage und Demontage, wobei durch den Wegfall der (De-) Montage und der dafür erforderlichen Kupplungseinrichtung Verschleiß und Verschleißteile reduziert werden können. Auch eine zusätzliche Abdichtung im Bereich einer Kupplung entfällt somit. Nach Entnahme der Nahrungsmittel aus dem Garraum kann ein Reinigungsprozess gestartet werden, ohne dass der Nutzer weitere Vorkehrungen treffen muss. Es muss auch kein Bauraum zur Aufbewahrung des Reinigungskopfs während des Garvorgangs bereitgestellt werden.

Um das Reinigungsfluid von der Fluidkammer zum Reinigungskopf zu fördern und unter Hochdruck in den Garraum einzubringen, ist die Drehwelle bevorzugt zumindest im ersten Endabschnitt als Hohlwelle ausgebildet und der Reinigungskopf umfasst mindestens eine Austrittsöffnung für das Reinigungsfluid. Die Drehwelle weist dabei einen Zuführkanal auf, der mit der Fluidkammer und der mindestens einen Austrittsöffnung in Fluidverbindung steht. Auf diese Weise lässt sich das unter Hochdruck stehende Reinigungsfluid bis in den Reinigungskopf fördern, ohne komplexe und teure Leitungs- und Dichtungssysteme vorzusehen. Beispielsweise weist die Drehwelle einen axialen Zuführkanal auf, der sich von einer dem Reinigungskopf zugewandten Stirnfläche der Drehwelle bis auf Höhe der Fluidkammer erstreckt und mittels einer radialen Öffnung mit der Fluidkammer in Fluidverbindung steht.

Für eine gleichmäßige Verteilung des Reinigungsfluids und somit eine gleichmäßige und gründliche Reinigung kann es auch von Vorteil sein, wenn der Reinigungskopf eine Mehrzahl von Austrittsöffnungen, beispielsweise zwei, drei oder vier Austrittsöffnungen, zur Abgabe des Reinigungsfluids aufweist.

Um definierte Strahlen des Reinigungsfluids unter Hochdruck abzugeben, ist es bevorzugt, dass die mindestens eine Austrittsöffnung einen Durchmesser aufweist, der zwischen 0,2 mm und 5 mm, mehr bevorzugt zwischen 0,4 mm und 2 mm beträgt, noch mehr bevorzugt zwischen 0,6 mm und 0,8 mm. In einer bevorzugten Ausführungsform beträgt die Summe der Querschnittsflächen aller Austrittsöffnungen der einen Austrittsöffnung bzw. der Mehrzahl von Austrittsöffnungen zwischen 1 mm² und 2 mm², mehr bevorzugt zwischen 1,2 mm² und 1,4 mm². Dadurch kann erreicht werden, dass zum einen die mindestens eine Austrittsöffnung aufgrund von Partikeln im Reinigungsfluid, insbesondere im Wasser, nicht verstopft und zum anderen der Hochdruck aufrechterhalten werden kann.

Ein Volumenstrom des Reinigungsfluids, insbesondere des Wassers, der von der mindestens einen Austrittsöffnung bzw. von der Mehrzahl von Austrittsöffnungen abgegeben wird, beträgt vorzugsweise zwischen 10 l/min und 20 l/min, mehr bevorzugt zwischen 12 l/min und 15 l/min. Dadurch kann ein gutes Reinigungsergebnis erreicht werden, während der Hochdruck aufrechterhalten und der Verbrauch an Reinigungsfluid, insbesondere der Wasserverbrauch, begrenzt werden kann.

Eine besonders gründliche Reinigung des gesamten Garraums kann erreicht werden, wenn gemäß einer bevorzugten Ausführungsform die mindestens eine Austrittsöffnung derart um eine zweite Drehachse drehbar im Reinigungskopf gelagert ist, dass sich eine Drehbewegung des Reinigungskopfs um die erste Drehachse und eine Drehbewegung der mindestens einen Austrittsöffnung um die zweite Drehachse überlagern, wobei sich die erste und die zweite Drehachse schneiden, vorzugsweise unter einem Winkel von 90°. Im Allgemeinen ist die erste Drehachse vorzugsweise senkrecht zur Unterseite des Deckels ausgerichtet. Durch die Überlagerung der Drehbewegungen kann auch bei einer geringen Anzahl von Austrittsöffnungen und geringem Wasserverbrauch der mindestens eine austretende Strahl die Garraumwände überstreifen und den Garraum gründlich reinigen. Ist eine Mehrzahl von Austrittsöffnungen vorgesehen, kann diese gleichmäßig um die zweite Drehachse verteilt sein, wobei die Austrittsöffnungen in unterschiedliche Richtungen ausgerichtet sein können, vorzugsweise radial zur zweiten Drehachse.

Die Lageranordnung ist vorzugsweise fest am Deckel angebracht. Mittels der Lageranordnung ist der Reinigungskopf vorzugsweise fest mit dem Deckel verbunden und nicht von diesem lösbar, sodass jeder Montage- und Demontageaufwand für den Nutzer sicher vermieden wird und der Reinigungskopf dauerhaft am Deckel verbleibt. Nicht lösbar bedeutet in diesem Fall, dass der Reinigungskopf vom Nutzer nicht vom Deckel abgenommen werden kann, insbesondere nicht ohne den Einsatz von Werkzeugen, jedoch zu Wartungs- oder Reparaturarbeiten demontierbar ist. Die Lageranordnung ist vorzugsweise im Innenraum des Deckels aufgenommen, sodass die Drehwelle im Innenraum des Deckels drehbar gelagert ist. Beispielsweise ist der Lagerkörper hülsen- oder buchsenförmig ausgebildet und umgibt die Drehwelle, die mittels geeigneter Lager, wie zum Beispiel Wälz- oder Gleitlager, im Lagerkörper gelagert ist. Außerdem kann der Lagerkörper einen Flansch zur Befestigung am Deckel aufweisen. Der Reinigungskopf kann mittels bekannter Welle-Nabe-Verbindungen auf der Drehwelle gelagert sein, wie zum Beispiel mittels einer Keilwellenverbindung.

Es ist im Rahmen der Erfindung weiterhin bevorzugt, wenn die Antriebseinrichtung eine Drehmoment-Übertragungseinrichtung zum Übertragen eines Drehmoments vom Motor auf die Drehwelle umfasst und die Übertragungseinrichtung ebenfalls im Innenraum des Deckels aufgenommen ist. Somit ist die Antriebseinrichtung umfassend den Motor und die Übertragungseinrichtung platzsparend im Innenraum des Deckels an der Stelle bereitgestellt, an der das Drehmoment zum Antrieb der Drehwelle erforderlich ist. Das Dichtsystem umfassend das erste und das zweite Dichtelement sowie die Ablassöffnung schützt auch die Übertragungseinrichtung vor austretendem Reinigungsfluid.

Die Ausgangswelle des Motors ist vorzugsweise senkrecht zur ersten Drehachse ausgerichtet. Die Übertragungseinrichtung kann ein Kegelrad-Getriebe umfassen, wobei bevorzugt ein antreibendes Kegelrad drehfest auf der Ausgangswelle des Motors gelagert ist und ein angetriebenes Kegelrad drehfest auf der Drehwelle gelagert ist. Das antreibende Kegelrad und das angetriebene Kegelrad stehen miteinander in Eingriff. Das Drehmoment wird vorzugsweise auf den zweiten Endabschnitt der Drehwelle gegenüber dem ersten Endabschnitt übertragen. Folglich ist der erste Endabschnitt der Drehwelle außerhalb des Deckels und der zweite Endabschnitt im Innenraum des Deckels angeordnet und die Drehwelle erstreckt sich durch die Unterseite des Deckels.

Zum Abführen von Reinigungsfluid aus der Ablassöffnung können verschiedene Möglichkeiten vorgesehen sein. In einer bevorzugten Ausführungsform ist die Ablassöffnung mit einer Ablass-Fluidleitung, z.B. in Form eines Schlauchs, verbunden, die das Reinigungsfluid von der Ablassöffnung aus dem Innenraum des Deckels, vorzugsweise aus dem Gargerät leitet. Die Ablass-Fluidleitung kann ein erstes Ende aufweisen, das mit der Ablassöffnung verbunden ist, und ein zweites Ende aufweisen, das in einer Wand des Deckels oder außerhalb des Innenraums des Deckels, insbesondere außerhalb des Gargeräts angeordnet ist. Das zweite Ende der Ablass-Fluidleitung kann an einer vom Bediener des Gargeräts einsehbaren Stelle angeordnet sein. Zum Beispiel mündet das zweite Ende der Ablass-Fluidleitung in einer Seitenwand oder Unterseite des Deckels, wo das Reinigungsfluid dann austreten kann. Auf diese Weise ist eine einfache Funktionskontrolle der Dichtanordnung umfassend zumindest das erste und das zweite Dichtelement möglich. Ist das zweite Ende trocken, ist die Dichtanordnung in gutem Zustand. Treten am zweiten Ende gelegentlich Tropfen auf, deutet dies auf einen möglichen Verschleiß eines Dichtelements hin und es kann rechtzeitig reagiert werden. Treten am zweiten Ende viele Tropfen oder größere Fluidmengen auf, deutet dies auf ein defektes Dichtelement hin. Die Ablass-Fluidleitung kann aber auch zu einem Geräteablauf des Gargeräts führen, sodass das Reinigungsfluid von der Ablassöffnung in den Geräteablauf fließen kann.

Das Gargerät kann weiterhin eine Fluid-Sammeleinrichtung, zum Beispiel einem Behälter, umfassen und die Ablass-Fluidleitung führt von der Ablassöffnung zu der Fluid-Sammeleinrichtung. Beispielsweise mündet das zweite Ende der Ablass-Fluidleistung in die Fluid-Sammeleinrichtung. Die Fluid-Sammeleinrichtung kann im Inneren des Gargeräts oder außerhalb des Gargeräts angeordnet sein. Ist die Fluid-Sammeleinrichtung an einer durch den Bediener des Gargeräts einsehbaren Stelle angeordnet, ermöglicht auch dies eine Kontrolle, wie oben beschrieben, bzw. eine Ermittlung der pro Reinigungszyklus austretenden Menge an Reinigungsfluid.

In einer anderen Ausführungsform weist das Gargerät eine Fluidverbindung zwischen der Ablassöffnung und dem Garraum auf. Vorzugsweise führt diese Fluidverbindung von der Ablassöffnung in den Reinigungskopf und vom Reinigungskopf in den Garraum, wie nachfolgend detaillierter beschrieben. Dadurch sind keine zusätzlichen Leitungs- und Sammeleinrichtungen für das Reinigungsfluid erforderlich und das gegebenenfalls in den Zwischenraum eintretende Reinigungsfluid wird wie der Rest des Reinigungsfluids in den Garraum abgeführt.

Die Fluidverbindung zwischen der Ablassöffnung und dem Garraum umfasst bevorzugt einen Ablasskanal, der in der Lageranordnung, insbesondere im Lagerkörper, ausgebildet ist und in Fluidverbindung mit der Ablassöffnung und dem Reinigungskopf steht. Der Ablasskanal kann direkt an ein Ende der Ablassöffnung angrenzen. Der Ablasskanal ist unabhängig von einer Durchgangsöffnung des Lagerkörpers für die Drehwelle ausgebildet, zum Beispiel als Bohrung im Lagerkörper parallel und beabstandet zur ersten Drehachse. So kann das Reinigungsfluid aus dem Zwischenraum in Richtung Garraum gefördert werden, ohne die Lageranordnung bzw. den Lagerkörper zu verlassen, wodurch mangels zusätzlicher Kupplungs- und Leitungseinrichtungen ein besonders einfaches und dichtes System bereitgestellt wird.

Die Lageranordnung kann einen Stutzen umfassen, der den ersten Endabschnitt der Drehwelle umgibt, auf dem der Reinigungskopf gelagert ist, und der eine Durchgangsöffnung aufweist, durch die die Drehwelle verläuft. Der Stutzen kann fest am Deckel bzw. einer Komponente der Lageranordnung, insbesondere am Lagerkörper, angebracht sein. Der Stutzen kann derart ausgebildet sein, dass er eine Reihe vorteilhafter Merkmale unabhängig voneinander oder in Kombination verwirklicht, wie nachfolgend beschrieben.

Zum einen kann die Durchgangsöffnung des Stutzens einen Teil der Fluidverbindung zwischen der Ablassöffnung und dem Garraum bilden. Hierzu steht die Durchgangsöffnung vorzugsweise in Fluidverbindung mit der Ablassöffnung, zum Beispiel über den Ablasskanal, der im Lagerkörper ausgebildet ist. Dabei ist es weiterhin von Vorteil, wenn der Stutzen eine Vertiefung aufweist, die einen Spalt zwischen dem Lagerkörper und dem Stutzen von einem Auslass des Ablasskanals zur Durchgangsöffnung des Lagerkörpers hin bildet. Die Vertiefung kann die Durchlassöffnung umgeben und beispielsweise kreisförmig ausgebildet sein mit einem Radius, der größer oder gleich dem Abstand des Ablasskanals von der ersten Drehachse D1 ist. Auf diese Weise wird das Reinigungsfluid vollständig innerhalb der Lageranordnung von der Ablassöffnung zum Reinigungskopf gefördert und es entstehen keine zusätzlichen, abzudichtenden Stellen entlang der Fluidverbindung von der Ablassöffnung zum Garraum.

In einer Ausführungsform weist eine innere Mantelfläche der Durchgangsöffnung mindestens eine Nut auf, die parallel zur ersten Drehachse verläuft und eine Fluidverbindung entlang der Drehwelle bereitstellt. Dadurch wird ein Durchlass entlang der Drehwelle ermöglicht, auch wenn sich ein Spalt zwischen der Drehwelle und dem Stutzen zum Beispiel aufgrund des auf der Drehwelle gelagerten Reinigungskopfs verringert. Es kann auch eine Mehrzahl von Nuten, zum Beispiel zwei, drei oder vier Nuten vorgesehen sein, die vorzugsweise gleichmäßig über den Umfang der Durchgangsöffnung verteilt sind. In axialer Richtung kann sich die mindestens eine Nut zumindest über den Bereich der inneren Mantelfläche der Durchgangsöffnung des Stutzens erstrecken, in dem ansonsten zum Beispiel aufgrund einer Welle-Nabe-Verbindung zwischen dem Reinigungskopf und der Drehwelle ein ausreichender Durchfluss nicht oder nur schwer möglich ist.

Weiterhin ist der Stutzen vorzugsweise zumindest zwischen der Unterseite des Deckels und dem Reinigungskopf vorgesehen, kann sich aber auch teilweise in den Deckel hinein erstrecken. In einer vorteilhaften Ausgestaltung weist der Stutzen zwischen der Unterseite des Deckels und dem Reinigungskopf eine im Wesentlichen konische Form auf. Genauer weist der Stutzen eine sich zum Reinigungskopf hin verjüngende Form auf. D. h., dass ein Radius des Stutzens radial zur ersten Drehachse an einem dem Reinigungskopf zugewandten Ende kleiner ist als ein Radius des Stutzens an einem deckelseitigen Ende. Vorzugsweise ist eine Mantelfläche des Stutzens konkav gekrümmt und kann bündig zur Unterseite des Deckels auslaufen. Durch die Form des Stutzens wird erreicht, dass ein aus der zumindest einen Austrittsöffnung austretender Strahl des Reinigungsfluids auf die Mantelfläche des Stutzens trifft und von dieser abgelenkt wird, sodass der Stutzen gereinigt wird und ein durch den Stutzen oder die Drehwelle bedingter Sprühschatten minimiert oder eliminiert werden kann.

Weiterhin vorteilhaft kann der Stutzen zum Erzeugen einer Drehbewegung der mindestens einen Austrittsöffnung um die zweite Drehachse derart mit dem Reinigungskopf in Eingriff stehen, dass bei der Drehung des Reinigungskopfs um die erste Drehachse die Drehbewegung der mindestens einen Austrittsöffnung um die zweite Drehachse erzeugt wird. Bevorzugt ist die mindestens eine Austrittsöffnung in diesem Fall in einem Träger des Reinigungskopfs vorgesehen, der um die zweite Drehachse drehbar im Reinigungskopf gelagert ist. Der Träger kann ein erstes Kegelrad aufweisen, das integral mit dem Träger ausgebildet oder als separate Komponente drehfest auf diesem gelagert sein kann. Der Stutzen weist ein zweites Kegelrad auf, das integral mit dem Stutzen ausgebildet oder als separate Komponente drehfest auf diesem gelagert sein kann. Das erste und das zweite Kegelrad stehen miteinander in Eingriff. Vorzugsweise ist das erste Kegelrad koaxial zur zweiten Drehachse angeordnet und das zweite Kegelrad koaxial zur ersten Drehachse angeordnet. Der drehfest auf der Drehwelle gelagerte Reinigungskopf kann sich um die erste Drehachse drehen, wobei sich auch der Träger und das erste Kegelrad um die erste Drehachse drehen. Dabei wälzt das erste Kegelrad auf dem zweiten Kegelrad ab und wird dadurch in Drehung um die zweite Drehachse versetzt. Mit dem Träger dreht sich auch die mindestens eine Austrittsöffnung um die zweite Drehachse. Entsprechendes gilt für eine Mehrzahl von Austrittsöffnungen.

Reinigungsfluid, das durch die Durchgangsöffnung des Stutzens zum Reinigungskopf gelangt, kann entweder an eine Außenseite des Reinigungskopfs fließen oder durch den Reinigungskopf in den Garraum gelangen. Der Reinigungskopf ist bevorzugt derart ausgebildet, dass Reinigungsfluid aus ihm austreten kann, das entlang der Drehwelle und eines auf der Drehwelle gelagerten Abschnitts des Reinigungskopfs in das Innere des Reinigungskopfs gelangt. Hierzu kann im Reinigungskopf ein geeigneter Hohlraum und/oder Spalt vorgesehen sein, der in Fluidverbindung mit der Durchgangsöffnung des Stutzens und dem Garraum steht, beispielsweise entlang des Trägers der mindestens einen Austrittsöffnung.

Im Allgemeinen ist die Reinigungseinrichtung bevorzugt dazu eingerichtet, das Reinigungsfluid unter einem Hochdruck bereitzustellen, der zwischen 40 bar und 300 bar, mehr bevorzugt zwischen 60 bar und 250 bar, noch mehr bevorzugt zwischen 100 bar und 200 bar beträgt. Die Reinigungseinrichtung kann eine Pumpe, insbesondere eine Hochdruckpumpe, umfassen, die das Reinigungsfluid unter Hochdruck bereitstellt. Besonders gute Reinigungsergebnisse lassen sich mit einem Hochdruck von über 100 bar, z.B. mit mindestens 120 bar, mindestens 140 bar oder mindestens 160 bar erzielen. Durch Hochdruck in dem zuvor angegebenen Bereich kann gewährleistet werden, dass das aus der mindestens einen Austrittsöffnung austretende Reinigungsfluid einen ausreichend hohen Druck zur mechanischen Reinigung des Garraums aufweist, um auch hartnäckige Rückstände abzutragen. Niedrigere Drücke, beispielsweise im Bereich von 1 bar bis 20 bar, reichen in der Regel nicht aus, um sämtliche Rückstände zuverlässig von den Garraumwänden zu lösen, wodurch das gewünschte Reinigungsergebnis nicht erreicht wird. Von den angegebenen, bevorzugten Bereichen des Hochdrucks sollen im Rahmen der Erfindung auch alle Zwischenwerte einzeln, insbesondere in ganzen bar-Werten, umfasst sein. Vor allem lassen sich die Ober- und Untergrenzen der angegebenen Werte auch unabhängig voneinander ändern, z.B. in Schritten von 5 bar.

Zum Zuführen des Reinigungsfluids umfasst die Reinigungseinrichtung bevorzugt eine Fluidleitung, die als Hochdruckleitung, insbesondere als Druckschlauch, ausgebildet ist und zumindest teilweise im Innenraum des Deckels aufgenommen ist. Dadurch lässt sich das unter Hochdruck bereitgestellte Reinigungsfluid, insbesondere Wasser, besonders einfach in den Deckel und in Richtung des Reinigungskopfs führen. Die Fluidleitung steht in Fluidverbindung mit der mindestens einen Austrittsöffnung des Reinigungskopfes. Die Fluidleitung kann an die Lageranordnung und dort bevorzugt direkt an den Lagerkörper angeschlossen sein. Trotz Drehung der Drehwelle und des Reinigungskopfs bleibt der Anschluss der Fluidleitung dadurch ortsfest. Der Anschluss für die Fluidleitung kann am Lagerkörper vorgesehen sein und mit der Fluidkammer, insbesondere mit der dritten Öffnung des Kammer-Einsatzelements, im Lagerkörper in Fluidverbindung stehen. Weiterhin ist die Fluidleitung vorzugsweise an die Pumpe angeschlossen. Vorteilhafterweise erstreckt sich die Fluidleitung in Form des Druckschlauchs im Deckel von der Lageranordnung zu einer Schlauchdurchführung, durch die Schlauchdurchführung in das Gehäuse des Gargeräts und im Gehäuse zur Pumpe.

Um eine platzsparende Anordnung im Deckel zu erzielen, ist die Lageranordnung vorzugsweise zwischen dem Motor und der Fluidleitung aufgenommen. Der Motor und die Fluidleitung liegen einander bezüglich der Lageranordnung gegenüber. Dies ist insbesondere dann von Vorteil, wenn der Deckel eine Mehrzahl von Hohlprofilen zur Versteifung des Deckels umfasst und der Motor sowie die Lageranordnung und zumindest ein Teil der Fluidleitung in einem Hohlprofil der Mehrzahl von Hohlprofilen aufgenommen sind. Andererseits wirkt sich die sichere Abdichtung der Lageranordnung durch das erste und das zweite Dichtelement bei dieser Ausführungsform besonders vorteilhaft aus, da aufgrund der beengten Platzverhältnisse die Wahrscheinlichkeit der Einwirkung austretenden Reinigungsfluids auf den Motor erhöht wäre.

Die Versteifung des Deckels mittels der Mehrzahl von Hohlprofilen ermöglicht die Verwendung des Gargeräts zum Druckgaren, wodurch die Garzeit verkürzt werden kann. Die Mehrzahl von Hohlprofilen erstreckt sich vorzugsweise parallel zueinander in einer ersten Richtung senkrecht zur ersten Drehachse, wobei die Hohlprofile in einer zweiten Richtung senkrecht zur ersten Richtung beabstandet zueinander angeordnet sind. Die erste Richtung ist vorzugsweise auch senkrecht zur Schwenkachse ausgerichtet. Zum Druckgaren ist der Deckel und somit der Garraum fest geschlossen. Aus Sicherheitsgründen ist dabei der Deckel verriegelt. Im Garraum kann zum Druckgaren ein Überdruck zwischen 0,2 bar und 1 bar, vorzugsweise zwischen 0,3 bar und 0,9 bar, mehr bevorzugt zwischen 0,4 bar und 0,8 bar herrschen.

Jedes Hohlprofil der Mehrzahl von Hohlprofilen weist beispielsweise einen im Wesentlichen rechteckigen Querschnitt auf. Eine Breite jedes Hohlprofils kann unabhängig von den anderen Hohlprofilen zwischen 80 mm und 160 mm, vorzugsweise zwischen 100 mm und 140 mm, mehr bevorzugt zwischen 110 und 120 mm betragen. Eine Höhe jedes Hohlprofils kann unabhängig von den anderen Hohlprofilen zwischen 40 mm und 70 mm, vorzugsweise zwischen 50 mm und 60 mm betragen.

Das erfindungsgemäße Gargerät wurde vorangehend ausführlich beschrieben. Es ist ersichtlich, dass die Reinigungseinrichtung insbesondere bei gewerblichen Gargeräten von Vorteil ist, die zur Zubereitung großer Mengen und für einen hohen Durchsatz ausgelegt sind. Der Garraum solcher Gargeräte kann z.B. eine Nutzfüllmenge (entsprechend dem maximalen Füllstand) aufweisen, die mindestens 50 Liter und bis zu 150 Liter oder mehr beträgt. Gewerbliche Gargeräte sind üblicherweise stationär angeordnet und können fest mit dem Wasser- und Abwassernetz verbunden sein. Alternativ können die Gargeräte auf Rollen bereitgestellt werden. Um die Handhabung großer Mengen z.B. flüssiger Speisen zu vereinfachen, kann der Garraum, bspw. in Form eines Tiegels im Gehäuse, kippbar sein, insbesondere motorisch kippbar sein, wie von Kippbratpfannen bekannt. Außerdem kann der Deckel verriegelbar sein, insbesondere motorisch verriegelbar sein. Dies ist vor allem beim Druckgaren erforderlich. Grundsätzlich lässt sich das erfindungsgemäße Gargerät unter anderem zum Braten, Kochen, Frittieren und Druckgaren einsetzen.

Weitere Merkmale und Vorteile der vorliegenden Erfindung sind nachfolgend unter Bezugnahme auf die beigefügten Zeichnungen beschrieben.
- Fig. 1: zeigt schematisch eine perspektivische Ansicht eines Gargeräts gemäß einer Ausführungsform der vorliegenden Erfindung mit einem Garraum in Form eines Tiegels und geöffnetem Deckel.
- Fig. 2: zeigt schematisch eine Schnittansicht des Gargeräts entlang der Ebene E-E in Fig. 1 mit geschlossenem Deckel und schematisch angedeutetem Reinigungsvorgang.
- Fig. 3: zeigt perspektivisch eine Schnittansicht eines Ausschnitts des Deckels des Gargeräts nach Fig. 1 und 2.
- Fig. 4: zeigt im Detail eine Schnittansicht einer Reinigungseinrichtung und einer Antriebseinrichtung des Gargeräts.
- Fig. 5a: zeigt eine Schnittansicht der Reinigungseinrichtung in einer Ebene senkrecht zu der in Fig. 4.
- Fig. 5b: zeigt eine perspektivische Ansicht eines Stutzens der Reinigungseinrichtung nach Fig. 5a.
- Fig. 6a: zeigt eine Schnittansicht eines Ausschnitts des Gargeräts im Bereich der Schwenkachse des Deckels bei geschlossenem Deckel.
- Fig. 6b: zeigt eine Schnittansicht des Ausschnitts nach Fig. 6a bei geöffnetem Deckel.
- Fig. 7: zeigt eine perspektivische Ansicht einer Schlauchdurchführung zwischen dem Deckel und einem Gehäuse des Gargeräts im Bereich nach Fig. 6.
- Fig. 8: zeigt eine perspektivische Detailansicht des Ausschnitts nach Fig. 6 und Fig. 7 in einer alternativen Ausführungsform.
- Fig. 9: zeigt eine perspektivische Ansicht eines Bereichs eines Drehgelenks zwischen dem Deckel und dem Gehäuse des Gargeräts.
- Fig. 10: zeigt eine perspektivische Detailansicht eines Elements der Schlauchdurchführung nach Fig. 8

In den Figuren sind gleiche Elemente mit denselben Bezugsziffern bezeichnet.

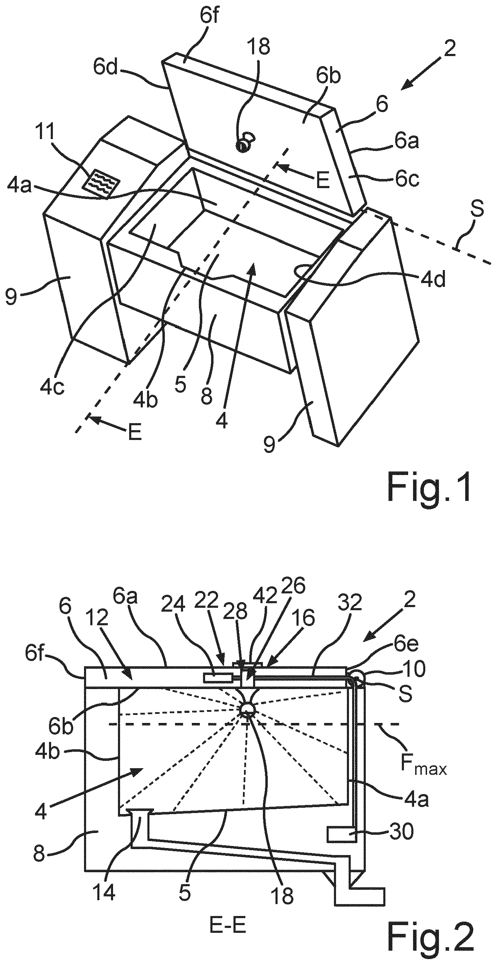

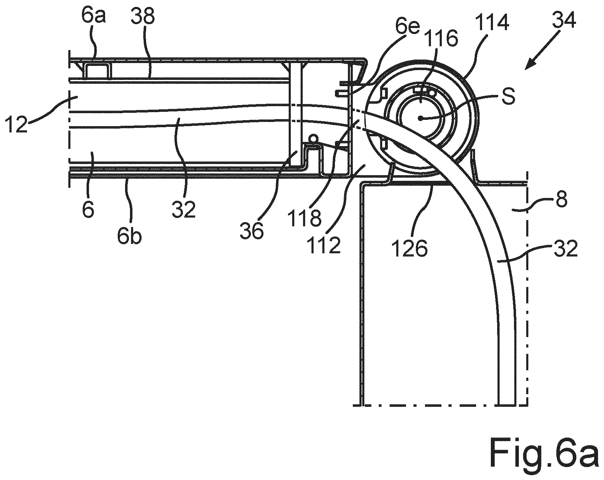

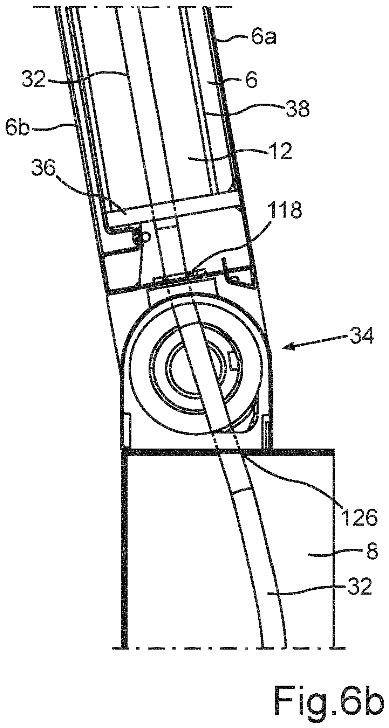

In Fig. 1 und 2 ist ein erfindungsgemäßes gewerbliches Gargerät 2 schematisch dargestellt, wobei Fig. 1 eine perspektivische Ansicht und Fig. 2 eine Schnittansicht entlang der Ebene E-E in Fig. 1 zeigt. Das Gargerät 2 kann einen Garraum 4 und einen Deckel 6 zum Verschließen des Garraums 4 umfassen, der um eine Schwenkachse S zwischen einem geöffneten Zustand (Fig. 1, 6b) und einem geschlossenen Zustand (Fig. 2, 6a) schwenkbar ist. Die Schnittansicht nach Fig. 2 zeigt einen Schnitt in einer Ebene E-E senkrecht zur Schwenkachse S.

In der vorliegenden Ausführungsform umfasst das Gargerät 2 ein Gehäuse 8 und der Garraum 4 ist in Form eines Tiegels 4 im Gehäuse 8 ausgebildet. Das Gehäuse 8 kann zugleich einen Sockel des Gargeräts 2 bilden oder, wie in Fig. 1 dargestellt, in einem Gestell oder in Stützen 9 aufgehängt sein, sodass es um eine Achse parallel zur Schwenkachse S gekippt werden kann, um Speisen aus dem Garraum 4 nach vorne auszugießen. Ferner kann das Gargerät 2 eine Bedien- und Anzeigeeinrichtung 11 zum Bedienen des Gargeräts 2 und zum Anzeigen von Informationen, zum Beispiel zum Garvorgang oder zu Garprogrammen, umfassen.

Der Deckel 6 kann mittels eines Drehgelenks 10 (s. Fig. 2) um die Schwenkachse S schwenkbar am Gehäuse 8 angebracht sein, um den Garraum 4 zu öffnen und zu schließen. Der Deckel 6 weist eine Oberseite 6a, eine Unterseite 6b und zumindest eine Seitenwand 6c auf, die die Oberseite 6a und die Unterseite 6b miteinander verbindet. Ist der Deckel 6, wie dargestellt, im Wesentlichen rechteckig bzw. quaderförmig ausgebildet, weist der Deckel 6 vier Seitenflächen 6c, 6d, 6e, 6f auf. Die Oberseite 6a, die Unterseite 6b und die zumindest eine Seitenwand 6c, d, e, f definieren einen Innenraum 12 des Deckels 6. Im geschlossenen Zustand des Deckels 6 (Fig. 2) begrenzt die Unterseite 6b des Deckels 6 den Garraum 4.

Im Fall des tiegel- oder wannenförmigen Garraums 4 weist dieser eine hintere erste Wand 4a, eine vordere zweite Wand 4b, eine seitliche dritte Wand 4c und eine seitliche vierte Wand 4d auf, wobei die erste und die zweite Wand 4a, 4b einander gegenüberliegen und die dritte und die vierte Wand 4c, 4d einander gegenüberliegen. Nach unten ist der Garraum 4 durch einen Boden 5 begrenzt, der einen Ablauf 14 aufweisen kann, um etwaige Verschmutzungen oder flüssige Überreste aus dem Garraum 4 durch den Boden 5 entfernen zu können. Der Boden 5 kann im Wesentlichen waagrecht, z.B. als Bratplatte, oder leicht geneigt angeordnet sein, wobei im letzteren Fall der Ablauf 15 bevorzugt an einer tiefsten Stelle des Bodens 5 vorgesehen ist. Zum Erwärmen des Garraums 4 können entsprechende Heizelemente (nicht dargestellt) in den Wänden 4a, b, c, d und/oder dem Boden 5 vorgesehen sein. Der Deckel 6 ist üblicherweise mittels des Drehgelenks 10 an der Oberkante der hinteren ersten Wand 4a angelegt.

Alternativ zu dem hier dargestellten wannen- oder pfannenförmigen Tiegel 4 kann der Garraum 4 unterschiedliche Formen aufweisen, wie zum Beispiel halbkugelartig nach Art eines Wok oder kreiszylinderförmig.

Das Gargerät 2 umfasst weiterhin eine Reinigungseinrichtung 16 zum Reinigen des Garraums 4 nach der Zubereitung von Speisen im Garraum 4, um diesen für den nächsten Zubereitungsvorgang vorzubereiten. Die Reinigungseinrichtung 16 ist als Hochdruckeinrichtung ausgebildet. Aufgrund der Zuführung des Reinigungsfluids unter Hochdruck können Speisereste mechanisch von den Wänden 4a, 4b, 4c, 4d, dem Boden 5 und der Unterseite 6b des Deckels 6 abgetragen werden. Es kann reines Wasser ohne den Zusatz von chemischen Reinigungsmitteln als Reinigungsfluid verwendet werden.

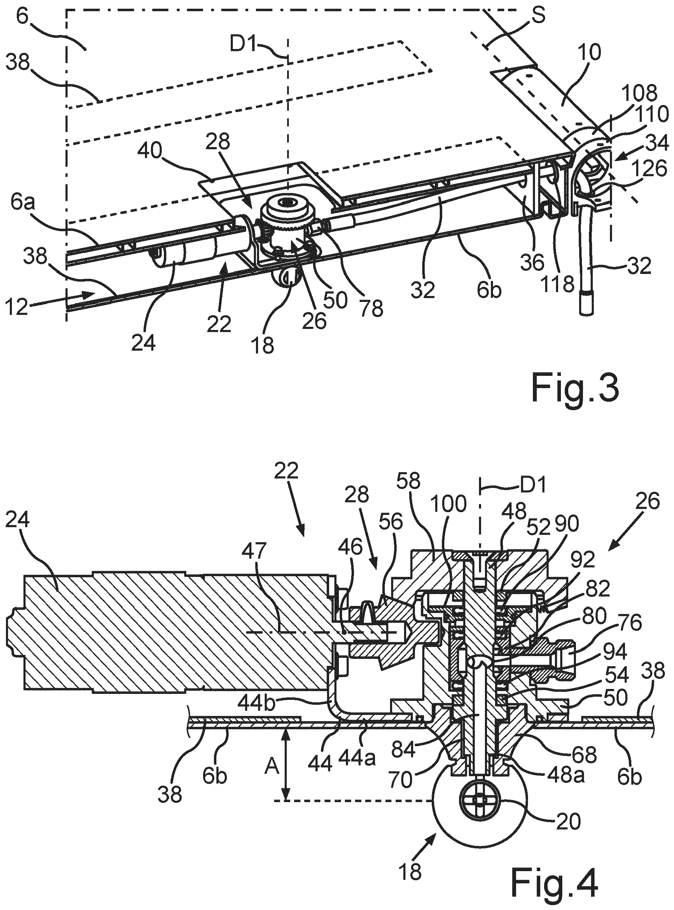

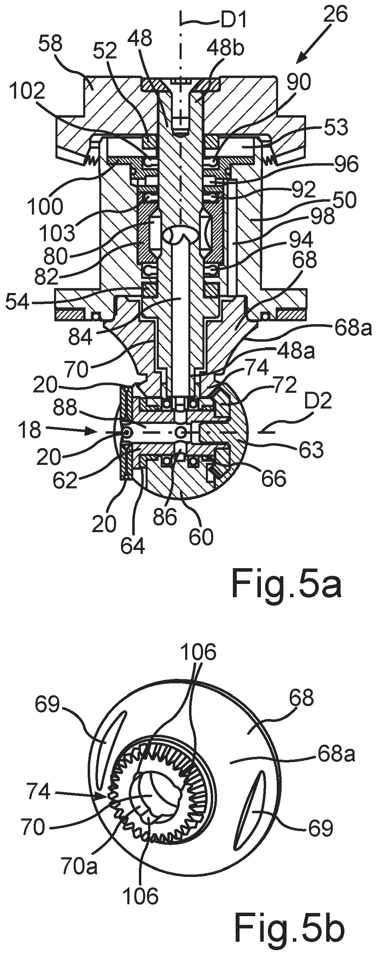

Die Reinigungseinrichtung 16 umfasst einen Reinigungskopf 18, der mindestens eine Austrittsöffnung 20, bevorzugt eine Mehrzahl von Austrittsöffnungen 20 (siehe Fig. 4, 5a), zur Abgabe des Reinigungsfluids in den Garraum 4 aufweisen kann. In Fig. 2 sind aus der mindestens einen Austrittsöffnung 20 austretende Strahlen des Reinigungsfluids (z.B. Wasserstrahlen) gestrichelt angedeutet, wobei diese nicht gleichzeitig sondern zumindest zum Teil durch die Bewegung des Reinigungskopfes nacheinander austreten. Die Verwendung von Wasser als Reinigungsfluid hat dabei weiterhin den Vorteil, dass die Waschflotte nicht umzuwälzen ist, wie es bei der Zugabe von Reinigungsmitteln üblich wäre, wodurch die mindestens eine Austrittsöffnung mit sehr kleinem Durchmesser aufgrund von Partikeln in der Waschflotte verstopfen könnte.

In einer bevorzugten Ausführungsform umfasst das Gargerät 2 eine Antriebseinrichtung 22 mit einem Motor 24 zum rotatorischen Antreiben des Reinigungskopfs 18. Der Reinigungskopf 18 ist am Deckel 6 um eine erste Drehachse D1 (siehe Fig. 3 und 4) drehbar gelagert und zumindest der Motor 24 der Antriebseinrichtung 22 kann im Innenraum 12 des Deckels 6 aufgenommen sein. Durch die motorisch angetriebene Rotation des Reinigungskopfs 18 zumindest um die erste Drehachse D1 kann eine möglichst vollständige und gründliche Reinigung des Garraums 4 erreicht werden. Zudem ist durch die Lagerung des Reinigungskopfs 18 am Deckel 6 eine besonders vorteilhafte Anordnung des Reinigungskopfs 18 im Garraum 4 möglich.

Zum einen kann der Reinigungskopf 18 bei geschlossenem Deckel 6, wie in Fig. 2 gezeigt, im Wesentlichen mittig zwischen der hinteren ersten Wand 4a und der vorderen zweiten Wand 4b, sowie vorzugsweise im Wesentlichen mittig zwischen den seitlichen Wänden 4c, 4d und somit in einer horizontalen Ebene möglichst zentral im Garraum 4 angeordnet werden. Dadurch können die Wände 4a-d des Garraums 4 gut mit Reinigungsfluid beaufschlagt werden, ohne dass hierfür wie im eingangs beschriebenen Stand der Technik eine relativ lange Lanze erforderlich ist, wodurch auch ein möglicher Sprühschatten minimiert bzw. eliminiert werden kann.

Ferner kann der Reinigungskopf 18 in einem geringen Abstand A zur Unterseite 6b des Deckels 6 angeordnet werden, wobei der Abstand A zwischen einem Mittelpunkt des Reinigungskopfs 18 und der Unterseite 6b des Deckels 6 beispielsweise weniger als 50 mm, vorzugsweise weniger als 30 mm beträgt. Durch den geringen Abstand kann ein möglicherweise durch die Lagerung des Reinigungskopfs 18 bedingter Sprühschatten weiter minimiert bzw. eliminiert werden. Zudem kann für den Garraum 4 ein maximaler Füllstand Fmax definiert sein, bis zu welchem der Garraum 4 durch den Nutzer mit Speisen zum Garen befüllt werden darf. Der geringe Abstand des Reinigungskopfs 18 zur Unterseite 6b des Deckels 6 ermöglicht, dass der Reinigungskopf 18 bei geschlossenem Deckel 6 vollständig oberhalb des maximalen Füllstands Fmax angeordnet ist.

Insbesondere die Lagerung des Reinigungskopfs 18 am Deckel 6, durch die der Reinigungskopf 18 beim Öffnen des Deckels 6 aus dem Garraum 4 und dem Arbeitsbereich des Nutzers bewegt wird, und die platzsparende Anordnung nahe der Unterseite 6b des Deckels 6 tragen vorteilhafterweise dazu bei, dass der Reinigungskopf 18 dauerhaft am Deckel 6 angebracht sein kann und nicht vom Nutzer montiert und demontiert werden muss.

Die Reinigungseinrichtung 16 umfasst ferner eine Lageranordnung 26, mittels derer der Reinigungskopf 18 drehbar im Deckel 6 gelagert ist. Grundsätzlich ist der Reinigungskopf 18 derart am Deckel 6 gelagert, dass er der Unterseite 6b des Deckels 6 zugeordnet ist. Die Antriebseinrichtung 22 umfasst vorzugsweise eine Drehmoment-Übertragungseinrichtung 28 (im Folgenden vereinfacht Übertragungseinrichtung 28) zum Übertragen eines Drehmoments vom Motor 24 auf die Lageranordnung 26. Bevorzugt sind, wie dargestellt, auch die Lageranordnung 26 und die Übertragungseinrichtung 28 im Innenraum 12 des Deckels 6 aufgenommen.

Zum Bereitstellen des Reinigungsfluids unter Hochdruck umfasst das Gargerät 2 vorzugsweise eine (Hochdruck-) Pumpe 30, die im Gehäuse 8 des Gargeräts 2 vorgesehen sein kann. Eine Fluidleitung 32, insbesondere in Form eines Druckschlauchs 32, kann zum Zuführen des Reinigungsfluids in Richtung des Reinigungskopfs 18 vorgesehen sein. Die Fluidleitung 32 ist als Hochdruckleitung ausgebildet, vorzugsweise an die Lageranordnung 26 angeschlossen und teilweise im Innenraum 12 des Deckels 6 aufgenommen. Die Fluidleitung 32 kann sich von der Lageranordnung 26 im Deckel 6 zu einer Schlauchdurchführung 34 erstrecken, durch die sie vom Deckel 6 in das Gehäuse 8 verlaufen kann und, wie weiter unten detailliert beschrieben, sich von dort zur Pumpe 30 erstrecken kann, an die sie angeschlossen ist.

Die Antriebseinrichtung 22 mit dem Motor 24 und der Übertragungseinrichtung 28 sowie die Reinigungseinrichtung 16 mit dem Reinigungskopf 18 und der Lageranordnung 26 sind nachfolgend unter Bezugnahme auf die Figuren 3 bis 5 detailliert beschrieben.

In Fig. 3 ist ein Ausschnitt des Deckels 6 perspektivisch in einer Schnittansicht in einer Schnittebene senkrecht zur Schwenkachse S dargestellt. Fig. 4 zeigt die Antriebseinrichtung 22, die Lageranordnung 26 und den Reinigungskopf 18 in einer Schnittansicht durch die erste Drehachse D1 und senkrecht zur Schwenkachse S, während Fig. 5a die Lageranordnung 26 und den Reinigungskopf 18 in einer Schnittansicht durch die Drehachse D1 senkrecht zur Ansicht nach Fig. 4 zeigt.

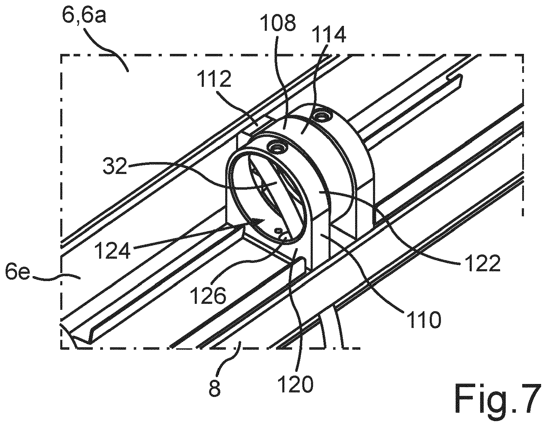

Wie in Fig. 3 zu sehen, sind der Motor 24 sowie die Übertragungseinrichtung 28 und die Lageranordnung 26 vorzugsweise im Innenraum 12 des Deckels 6 aufgenommen. Genauer kann der Deckel 6 eine Verkleidung, zum Beispiel aus Blech, die die Oberseite 6a und die Unterseite 6b des Deckels 6 bildet, sowie einen Rahmen 36 als Stützstruktur für die Verkleidung umfassen. Grundsätzlich kann der Deckel 6 zur Versteifung eine Mehrzahl von Hohlprofilen 38 umfassen, die in Fig. 3 zum Teil gestrichelt angedeutet sind, wobei ein zentrales Hohlprofil 38 auch im Schnitt dargestellt ist. Die Hohlprofile 38 können einen rechteckigen Querschnitt haben und eine Längsrichtung aufweisen, die vorzugsweise senkrecht zur ersten Drehachse D1 und zur Schwenkachse S ausgerichtet ist. In diesem Fall sind der Motor 24 sowie vorzugsweise die Übertragungseinrichtung 28 und die Lageranordnung 26 innerhalb des zentralen Hohlprofils 38 angeordnet. Wie in Fig. 3 zu sehen, ist auch die Fluidleitung 32 im Deckel 6 und gegebenenfalls im zentralen Hohlprofil 38 angeordnet und von der Lageranordnung 26 im Deckel 6 zur Schlauchdurchführung 34 geführt, durch die sie sich in das Gehäuse 8 erstreckt, wie unter Bezugnahme auf Fig. 6 bis 10 näher beschrieben.

Damit die im Deckel 6 angeordneten Komponenten im Deckel 6 montiert werden können und beispielsweise zu Wartungszwecken zugänglich sind, kann die Oberseite 6a des Deckels 6 eine Zugangsöffnung 40 aufweisen, die sich, falls vorhanden, auch durch das zentrale Hohlprofil 38 erstrecken kann. Wie in Fig. 2 angedeutet, kann die Zugangsöffnung 40 durch eine Abdeckung 42 verschließbar sein, um ungewollte Manipulationen zu vermeiden.

Wie in Fig. 4 gezeigt, kann der Motor 24 an einem Haltewinkel 44 im Innenraum 12 des Deckels 6 gelagert sein. Beispielsweise ist der Haltewinkel 44 L-förmig ausgebildet, wobei ein erster Schenkel 44a an der Innenseite des Deckels 6 angebracht ist, zum Beispiel an einem die Unterseite 6b des Deckels 6 bildenden Blech. Der Motor 24 kann an einem zweiten Schenkel 44b des Haltewinkels 44 angebracht, z.B. geschraubt, sein, der senkrecht zum ersten Schenkel 44a in den Innenraum 12 des Deckels 6 ragt. Der Haltewinkel 44 kann eine Öffnung aufweisen, durch die sich eine Ausgangswelle 46 des Motors 24 erstreckt.

Der Reinigungskopf 18 ist mittels der Lageranordnung 26 am Deckel 6 drehbar gelagert, deren Aufbau in den Schnittansichten nach Fig. 4 und 5a gut zu erkennen ist. Die Lageranordnung 26 kann fest am Deckel 6 angebracht sein, beispielsweise auf der Innenseite des die Unterseite 6b bildenden Blechs. Zum Beispiel können Gewindebolzen an die Innenseite dieses Blechs geschweißt sein und der Haltewinkel 44 und die Lageranordnung 26 weisen Aufnahmen für diese Gewindebolzen auf und sind an diesen mittels Muttern gesichert, wie in Fig. 3 gezeigt.

Die Lageranordnung 26 umfasst eine Drehwelle 48, die drehbar gelagert ist, die die erste Drehachse D1 definiert und auf der der Reinigungskopf 18 drehfest gelagert ist. Beispielsweise ist der Reinigungskopf 18 mittels einer Welle-Nabe-Verbindung, wie einer Keilwellenverbindung, auf einem ersten Endabschnitt 48a der Drehwelle 48 gelagert. Die Lageranordnung 26 umfasst weiterhin einen Lagerkörper 50, in dem die Drehwelle 48 drehbar gelagert ist, wie hier mittels eines ersten Gleitlagers 52 und eines zweiten Gleitlagers 54. Das Gleitlager 52 kann in einem Lager-Einsatzelement 53 aufgenommen sein, der in den Lagerkörper 50 eingesetzt ist. Es können aber auch andere Lager, wie zum Beispiel Wälzlager verwendet werden. Der Lagerkörper 50 kann hülsen- oder buchsenförmig ausgebildet sein und einen Flansch zur Befestigung am Deckel 6 aufweisen.

Zur Übertragung eines Drehmoments vom Motor 24 auf die Drehwelle 48 ist die Übertragungseinrichtung 28 vorgesehen. Die Ausgangswelle 46 des Motors 24 weist eine Achse 47 auf, die vorzugsweise senkrecht zur ersten Drehachse D1 ausgerichtet ist. In diesem Fall kann die Übertragungseinrichtung 28 ein Kegelrad-Getriebe umfassen. Ein antreibendes Kegelrad 56 ist hierzu drehfest auf der Ausgangswelle 46 des Motors 24 gelagert und ein angetriebenes Kegelrad 58 ist drehfest auf der Drehwelle 48 gelagert, insbesondere auf einem dem ersten Endabschnitt 48a gegenüberliegenden zweiten Endabschnitt 48b der Drehwelle 48. Das antreibende Kegelrad 56 kann weiterhin einen Wellenstumpf gegenüber der Ausgangswelle 46 aufweisen, der drehbar im Lagerkörper 50 gelagert ist, beispielsweise mittels eines Gleitlagers.

Das antreibende Kegelrad 56 und das angetriebene Kegelrad 58 stehen miteinander in Eingriff. Eine Drehbewegung der Ausgangswelle 46 wird folglich über das Kegelrad-Getriebe 56, 58 auf die Drehwelle 48 übertragen und resultiert folglich in einer Drehung des Reinigungskopfs 18 und somit der mindestens einen Austrittsöffnung 20 um die erste Drehachse D1.

Um auch bei geringer Anzahl von Austrittsöffnungen 20 ein möglichst gutes Reinigungsergebnis zu erzielen, ist die mindestens eine Austrittsöffnung 20 in einer besonders bevorzugten Ausführungsform derart um eine zweite Drehachse D2 drehbar im Reinigungskopf 18 gelagert, dass sich die Drehbewegung des Reinigungskopfs 18 um die erste Drehachse D1 und eine Drehbewegung der mindestens einen Austrittsöffnung 20 um die zweite Drehachse D2 überlagern. Die erste Drehachse D1 und die zweite Drehachse D2 schneiden sich, hier unter einem Winkel von 90°.

Ein Aufbau des Reinigungskopfs 18, der auch eine Drehung der mindestens einen Austrittsöffnung 20 um die zweite Drehachse D2 ermöglicht, ist nachfolgend unter Bezugnahme auf Fig. 5a beschrieben. Der Reinigungskopf 18 kann ein Kopfteil 60 umfassen, das drehfest auf der Drehwelle 48 gelagert ist und mit dieser um die erste Drehachse D1 drehbar ist. Das Kopfteil 60 kann koaxial zur zweiten Drehachse D2 eine Durchgangsöffnung aufweisen, in der ein Träger 62 um die zweite Drehachse D2 drehbar im Kopfteil 60 gelagert ist, beispielsweise mittels der Gleitlager 64 und 66. In dem Träger 62 ist die mindestens eine Austrittsöffnung 20 vorgesehen, sodass sie mit diesem um die zweite Drehachse D2 drehbar ist. Die Austrittsöffnung 20 kann durch eine Düse gebildet sein, die am Träger 62 angebracht ist, wobei in der dargestellten Ausführungsform vier, jeweils um 90° versetzte Düsen vorgesehen sind. Ist eine Mehrzahl von Austrittsöffnungen 20 vorgesehen, können diese gleichmäßig um die zweite Drehachse D2 verteilt sein und in unterschiedliche Richtungen, insbesondere radial zur zweiten Drehachse D2, ausgerichtet sein. Eine Kappe 63 des Reinigungskopfs 18 kann am Träger 62 gegenüberliegend zu dem Austrittsöffnungen vorgesehen sein.

Die Lageranordnung 26 kann weiterhin einen Stutzen 68 umfassen, der eine Reihe vorteilhafter Merkmale verwirklicht und zusätzlich zu den Schnittansichten in Fig. 4 und 5a in Fig. 5b perspektivisch dargestellt ist. Der Stutzen 68 umgibt den ersten Endabschnitt 48a der Drehwelle 48, insbesondere im Bereich außerhalb des Deckelinnenraums 12. Der Stutzen 68 kann mit dem Lagerkörper 50 oder einer anderen (Rahmen-) Komponente des Deckels 6 verbunden sein. Beispielsweise ist der Stutzen 68 verschraubt, wozu er an seiner Mantelfläche Schlüsselflächen 69 aufweisen kann, mit denen ein Gabelschlüssel eingreifen kann. Der Lagerkörper 50 kann hierzu einen Innengewindeabschnitt und der Stutzen 68 einen korrespondierenden Außengewindeabschnitt aufweisen. Vorzugsweise erstreckt sich der Stutzen 68 vom Lagerkörper 50 bis zum Reinigungskopf 18, wobei die Drehwelle 48 in diesem Bereich in einer Durchgangsöffnung 70, die den Stutzen 68 parallel zur ersten Drehachse D1 durchdringt, aufgenommen ist.

In einer vorteilhaften Ausgestaltung ist der Stutzen 68 derart ausgebildet, dass er mit dem Reinigungskopf 18 in Eingriff steht, um bei der Drehung des Reinigungskopfs 18 um die erste Drehachse D1 die Drehbewegung der mindestens einen Austrittsöffnung 20 um die zweite Drehachse D2 zu erzeugen. Genauer kann der Träger 62 ein erstes Kegelrad 72 aufweisen, das integral mit dem Träger 62 ausgebildet oder als separate Komponente drehfest auf diesem gelagert ist. Der Stutzen 68 kann ein zweites Kegelrad 74 aufweisen, das integral mit dem Stutzen 68 ausgebildet oder als separate Komponente drehfest auf diesem gelagert sein kann. Das erste und das zweite Kegelrad 72, 74 stehen miteinander in Eingriff. Bevorzugt ist das erste Kegelrad 72 koaxial zur zweiten Drehachse D2 angeordnet und das zweite Kegelrad 74 koaxial zur ersten Drehachse D1 angeordnet. Der Stutzen 68 und somit das zweite Kegelrad 74 stehen still. Wird die Drehwelle 48 um die erste Drehachse D1 gedreht, drehen sich mit ihr der Reinigungskopf 18 und der Träger 62 ebenfalls um die erste Drehachse D1. Dabei wälzt das erste Kegelrad 72 des Trägers 62 auf dem zweiten Kegelrad 74 ab und wird dadurch in Drehung um die zweite Drehachse D2 versetzt, wodurch sich die mindestens eine Austrittsöffnung 20 um die zweite Drehachse D2 dreht.

Besonders vorteilhaft und im Wesentlichen unabhängig von dem zuvor beschriebenen Eingriff mit dem Reinigungskopf 18 weist der Stutzen 68 zwischen der Unterseite 6b des Deckels 6 und dem Reinigungskopf 18 eine im Wesentlichen konische Form auf, die sich von der Unterseite 6b zum Reinigungskopf 18 hin verjüngt. Dabei kann die Mantelfläche 68a des Stutzens 68 gekrümmt sein, insbesondere konkav gekrümmt sein und bündig zur Unterseite 6b des Deckels 6 auslaufen. Vorzugsweise ist ein Radius des Stutzens 68 um die erste Drehachse D1 an seinem dem Reinigungskopf 18 zugewandten Ende kleiner als ein Abstand der zumindest einen Austrittsöffnung 20 bzw. einer durch eine Mehrzahl von Austrittsöffnungen 20 definierten Düsenebene von der ersten Drehachse D1.

Die konische Form des Stutzens 68 ist mangels Kanten besonders hygienisch und wird durch Auftreffen der Strahlen aus dem Reinigungskopf 18 selbst gereinigt. Zudem werden die Strahlen beim Auftreffen auf den Stutzen 68 abgelenkt und können zur Reinigung der Unterseite 6b des Deckels 6 beitragen. Ein etwaiger Sprühschatten wird minimiert.

Wie in Fig. 2 und 3 zu sehen, kann die Lageranordnung 26 zwischen dem Motor 24 und der Fluidleitung 32 aufgenommen sein, wobei sich der Motor 24 und die Fluidleitung 32 bezüglich der Lageranordnung 26 gegenüberliegen. Der Motor 24, die Lageranordnung 26 und die Fluidleitung 32 können folglich in einer Richtung senkrecht zur ersten Drehachse D1 und vorzugsweise senkrecht zur Schwenkachse S in einer Reihe angeordnet sein. Die Ausgangswelle 46 des Motors 24 und die Fluidleitung 32 sind dann in diese Richtung ausgerichtet.

Die Leitung des Reinigungsfluids im Deckel 6 zum Reinigungskopf 18 ist nachfolgend unter Bezugnahme auf Fig. 3 bis 5a beschrieben. Die Leitung des Reinigungsfluids vom Gehäuse 8, insbesondere von der Pumpe 30, in den Deckel 6 ist weiter unten unter Bezugnahme auf Fig. 1 und 6 bis 10 beschrieben.

Wie in Fig. 3 und 4 zu sehen, ist die Fluidleitung 32 an die Lageranordnung 26 angeschlossen. Hierzu kann am Lagerkörper 50 ein entsprechender Anschluss 76 vorgesehen sein, beispielsweise in Form eines Reduziernippels, auf den ein korrespondierender Anschluss 78 der Fluidleitung 32 steckbar ist. Der Anschluss 76 ist hier radial zur ersten Drehachse D1 ausgerichtet, es ist aber auch denkbar, einen axialen Anschluss der Fluidleitung 32 zu realisieren.

Weiterhin weist die Lageranordnung 26 eine Fluidkammer 80 auf, die in Fluidverbindung mit der Fluidleitung 32 steht. Hier ist die Fluidkammer 80 im Lagerkörper 50 ausgebildet. Unter anderem aus Montagegründen kann hierzu ein Kammer-Einsatzelement 82 vorgesehen sein, das in den Lagerkörper 50 eingesetzt ist und einen Hohlraum aufweist, der die Fluidkammer 80 bildet. Das Kammer-Einsatzelement 82 weist eine erste und eine zweite Öffnung, durch die sich die Drehwelle 48 erstreckt, sowie eine dritte Öffnung in Verbindung mit dem Anschluss 76 auf. Die Drehwelle 48 verläuft durch die Fluidkammer 80 bzw. umgibt die Fluidkammer 80 die Drehwelle 48, vorzugsweise vollständig. Die Fluidkammer 80 ist bevorzugt durch den Lagerkörper 50 bzw. das Kammer- Einsatzelement 82 begrenzt.

Die Drehwelle 48 kann abschnittsweise als Hohlwelle ausgebildet sein und einen Zuführkanal 84 aufweisen, der in Fluidverbindung mit der Fluidkammer 80 und dem Reinigungskopf 18 steht. Der Zuführkanal 84 kann vor allem im ersten Endabschnitt 48a der Drehwelle 48 in axialer Richtung vorgesehen sein, beispielsweise durch eine axiale Bohrung, die sich von der dem Reinigungskopf 18 zugewandten Stirnfläche der Drehwelle 48 bis auf Höhe der Fluidkammer 80 erstreckt. Eine radiale Öffnung in der Drehwelle 48 kann eine Verbindung der axialen Bohrung zur Fluidkammer 80 herstellen. Folglich kann Reinigungsfluid von der Fluidleitung 32 über den Anschluss 76 in die Fluidkammer 80 und von der Fluidkammer 80 durch den Zuführkanal 84 in der Drehwelle 48 in den Reinigungskopf 18 strömen.

Im Reinigungskopf 18 kann der Träger 62 eine radiale Bohrung 86 aufweisen, die in Fluidverbindung mit dem Zuführkanal 84 steht, und eine axiale Bohrung 88 aufweisen, die in Fluidverbindung mit der radialen Bohrung und der mindestens einen Austrittsöffnung 20 bzw. Düse steht. Auf diese Weise ist eine Fluidverbindung von der Fluidleitung 32 bis zur mindestens einen Austrittsöffnung 20 geschaffen. Die Kappe 63 des Reinigungskopfs 18 kann einen Zapfen aufweisen, der in die axiale Bohrung 88 des Trägers 62 gesteckt oder geschraubt ist.

Grundsätzlich sollte der Eintritt von Reinigungsfluid in den Innenraum 12 des Deckels vermieden werden. Da der Motor 24 und für diesen erforderliche Versorgungsleitungen (nicht dargestellt) zusammen mit der Lageranordnung 26 im Deckel 6 aufgenommen sein können, können besondere Abdichtmaßnahmen vorgesehen sein, um trotz des Hochdrucks und der Leitung des Reinigungsfluids durch mehrere teils bewegte Komponenten der Lageranordnung 26 den Austritt von Reinigungsfluid in den Innenraum 12 des Deckels 6 zu verhindern.

In einer Ausführungsform umfasst die Lageranordnung ein erstes Dichtelement 90 und ein zweites Dichtelement 92, die in axialer Richtung der Drehwelle 48 bezüglich der Fluidkammer 80 auf einer zweiten Seite des zweiten Endabschnitts 48b der Drehwelle 48 angeordnet sind und die Drehwelle 48 umgeben. Das erste Dichtelement 90 und das zweite Dichtelement 92 sind in axialer Richtung der Drehwelle 48 beabstandet zueinander angeordnet. Das erste Dichtelement 90 kann in axialer Richtung der Drehwelle 48 weiter von der Fluidkammer 80 entfernt sein als das zweite Dichtelement 92. Vorzugsweise umfasst die Lageranordnung 26 weiterhin ein drittes Dichtelement 94, das in axialer Richtung der Drehwelle 48 bezüglich der Fluidkammer 80 auf einer ersten Seite des ersten Endabschnitts 48a der Drehwelle 48 angeordnet ist und die Drehwelle 48 umgibt. Das erste, das zweite und das dritte Dichtelement 90, 92, 94 liegen dichtend an der Drehwelle 48 an und können als Wellendichtring ausgebildet sein. Durch die doppelte Abdichtung der Lageranordnung 26, insbesondere des Lagerkörpers 50, entlang der Drehwelle 48 nach oben zum Innenraum 12 des Deckels 6 hin mittels des ersten und des zweiten Dichtelements 90, 92 kann das Austreten von Reinigungsfluid in den Innenraum 12 zuverlässig vermieden werden.

Aufgrund der beabstandeten Anordnung des ersten und des zweiten Dichtelements 90, 92 ist zwischen diesen ein Zwischenraum ausgebildet. Um Reinigungsfluid, das trotz des ersten Dichtelements 90 in den Zwischenraum eindringen sollte, abführen zu können, weist die Lageranordnung 26 weiterhin eine Ablassöffnung 96 auf. Die Ablassöffnung 96 könnte grundsätzlich mit einer Fluid-Sammeleinrichtung und/oder Leitung zum Abführen des Reinigungsfluids aus dem Deckel 6 verbunden sein. In der vorliegenden Ausführungsform ist jedoch eine Fluidverbindung zwischen der Ablassöffnung 96 und dem Garraum 4 vorgesehen, sodass das Reinigungsfluid aus dem Zwischenraum durch die Ablassöffnungen 96 in den Garraum 4 geleitet werden kann. Es versteht sich, dass das näher an der Fluidkammer 80 angeordnete zweite Dichtelement 92 derart ausgelegt sein sollte, dass während des Betriebs kein Reinigungsfluid in den Zwischenraum eintritt und das erste Dichtelement 90 im Wesentlichen zur Absicherung vorgesehen ist. Im normalen Betrieb sollte es daher keinen kontinuierlichen Fluidstrom von der Ablassöffnung 96 in den Garraum 4 geben.

Die Ablassöffnung 96 kann senkrecht zur ersten Drehachse D1 ausgebildet sein, zum Beispiel im Lagerkörper 50. Eine leichte Herstellung wird ermöglicht, wenn die Lageranordnung 26 ein Ablauf-Einsatzelement 100 umfasst, das die Ablassöffnung 96 aufweist und in den Lagerkörper 50 eingesetzt ist. Das Ablauf-Einsatzelement 100 umgibt die Drehwelle 48 und weist die Ablassöffnung 96 in Form einer Bohrung und/oder Nut auf, die das Ablauf-Einsatzelement 100 in radialer Richtung durchdringt. Zum Beispiel ermöglicht eine umlaufende Nut entlang der Drehwelle 48, dass Reinigungsfluid um die Drehwelle 48 herum zur Ablassöffnung 96 gelangen kann. Vorzugsweise liegen das erste und/oder zweite Dichtelement 90, 92 an dem Ablauf-Einsatzelement 100 dichtend an, wozu das Ablauf-Einsatzelement 100 zumindest einen umlaufenden Sitz 102 zur Aufnahme des ersten bzw. zweiten Dichtelements 90, 92 aufweisen kann. Hier weist das Ablauf-Einsatzelement 100 den Sitz 102 für das erste Dichtelement 90 auf und das Kammer-Einsatzelement 82 weist einen Sitz 103 für das zweite Dichtelement 92 zwischen den Einsatzelementen 82, 100 auf.

Die Fluidverbindung zwischen der Ablassöffnung 96 und dem Garraum 4 kann grundsätzlich auf unterschiedliche Art und Weise realisiert werden. Bevorzugt verläuft die Fluidverbindung jedoch im Inneren der Lageranordnung 26 in den Reinigungskopf 18, aus dem das Reinigungsfluid dann austritt, wie nachfolgend beschrieben. So können weitere Kupplungsstellen vermieden werden, an denen das Reinigungsfluid in den Innenraum 12 des Deckels 6 austreten könnte.

Vorzugsweise ist im Lagerkörper 50 ein Ablasskanal 98 ausgebildet, der in Fluidverbindung mit der Ablassöffnungen 96 und mit dem Reinigungskopf 18 steht. Hierzu kann der Ablasskanal 98 direkt an die Ablassöffnung 96 angrenzen. Zum Beispiel ist der Ablasskanal 98 als Bohrung im Lagerkörper 50 parallel zur ersten Drehachse D1 sowie parallel und beabstandet zur Durchgangsöffnung des Lagerkörpers 50, durch die sich die Drehwelle 48 erstreckt, ausgebildet. Der Ablasskanal 98 mündet folglich an einer Unterseite des Lagerkörpers 50.

Es ist bevorzugt, dass die Fluidverbindung vom Ablasskanal 98 in den Garraum 4 durch den Stutzen 68 und den Reinigungskopf 18 führt. Der Stutzen 68 kann hierzu eine die Durchlassöffnung 70 umgebende Vertiefung aufweisen, die einen Spalt zwischen dem Lagerkörper 50 und dem Stutzen 68 bildet, durch den Reinigungsfluid vom Ausgang des Ablasskanals 98 zur Durchgangsöffnung 70 strömen kann. Die Vertiefung weist folglich einen Durchmesser auf, der in Abhängigkeit des Abstands des Ablasskanals 98 von der ersten Drehachse D1 gewählt ist. Die Ablassöffnung 96 und der Ablasskanal 98 stehen somit mit der Durchgangsöffnung 70 in Fluidverbindung.

Wie dargestellt, kann die Durchgangsöffnung 70 des Stutzens 68 einen Durchmesser aufweisen, der größer als der Durchmesser der Drehwelle 48 ist, sodass Reinigungsfluid zwischen dem Stutzen 68 und der Drehwelle 48 zum Reinigungskopf 18 strömen kann. Sollte zwischen der Drehwelle 48 und dem Stutzen 68 kein ausreichender Abstand einzuhalten sein, wie zum Beispiel im ersten Endabschnitt 48a der Drehwelle 48, auf dem der Reinigungskopf 18 gelagert ist, kann eine innere Mantelfläche 70a der Durchgangsöffnung 70 des Stutzens 68 mindestens eine Nut 106 aufweisen, die parallel zur ersten Drehachse D1 verläuft und eine Fluidverbindung entlang der Drehwelle 48 bereitstellt. Wie in Fig. 5b zu sehen, können mehrere Nuten 106 über den Umfang der inneren Mantelfläche 70a der Durchgangsöffnung 70 verteilt vorgesehen sein. In axialer Richtung kann die mindestens eine Nut 106 auf den Bereich begrenzt sein, in dem kein ausreichender Abstand einhaltbar ist, oder sich durch den gesamten Stutzen 68 erstrecken. Reinigungsfluid kann somit im Inneren der Lageranordnung 26 durch den Stutzen 68 in den Reinigungskopf 18 gelangen. Wie auf der linken Seite des Reinigungskopfs 18 in Fig. 5a zu sehen, weist der Reinigungskopf 18 z.B. zwischen den Austrittsöffnungen 20 und dem zweiten Kegelrad 74 bzw. dem Kopfteil 60 Hohlräume und Spalte auf, durch die das Reinigungsfluid aus dem Reinigungskopf in den Garraum 4 gelangen kann. So ist insgesamt eine Fluidverbindung zwischen der Ablassöffnung 96 und dem Garraum 4 geschaffen.

Der Verlauf der Fluidleitung 32, die insbesondere als Druckschlauch ausgebildet ist, von der Lageranordnung 26 durch die Schlauchdurchführung 34 zur Pumpe 30, wie in Fig. 1 und 3 gezeigt, wird nachfolgend unter Bezugnahme auf die Fig. 6 bis 10 beschrieben.

Ein besonders einfacher und aufwandsarmer Aufbau kann dadurch erreicht werden, dass die Fluidleitung 32 als flexibler Druckschlauch 32 ausgebildet ist, der sich vollständig von der Lageranordnung 26 bis zur Pumpe 30 erstreckt, was unter anderem durch die hierin beschriebenen Schlauchdurchführung 34 ermöglicht wird. Dadurch kann insbesondere auf komplexe Dicht- und Kopplungseinrichtungen verzichtet werden, die sonst vor allem im Bereich des Drehgelenks 10 erforderlich wären, um das Reinigungsfluid unter Hochdruck von der Pumpe 30 zur Lageranordnung 26 zu fördern. Im Folgenden wird die Fluidleitung 32 daher als Druckschlauch 32 bezeichnet. Um das Reinigungsfluid unter Hochdruck bereitzustellen, sollte der Druckschlauch 32 einen ausreichend hohen Betriebs- und Berstdruck aufweisen. Dies geht in der Regel mit einer erhöhten Steifigkeit des Druckschlauchs einher, sodass eine vorteilhafte Anordnung und Führung des Druckschlauchs 32 im Deckel, durch die Schlauchdurchführung 34 und im Gehäuse 8 die Verwendung eines steiferen Druckschlauchs 32 und somit den Einsatz eines höheren Drucks ermöglicht.

Wie in Fig. 3, 6a und 6b gezeigt, verläuft der Druckschlauch 32 im Innenraum 12 des Deckels 6 zur Schlauchdurchführung 34 und durch diese hindurch ins Gehäuse 8 des Gargeräts 2. Während der Druckschlauch 32 oder auch eine andere Fluidleitung im Innenraum 12 des Deckels 6 und im Gehäuse 8 ohne große Einschränkungen verlaufen können, ist die Gestaltung im Bereich des Drehgelenks 10, das den beweglichen Deckel 6 mit dem stationären Gehäuse 8 verbindet, aufgrund der Relativbewegungen und erforderlichen Abdichtungsmaßnahmen bei Hochdruck mit Schwierigkeiten verbunden. Die Schlauchdurchführung 34 ermöglicht an dieser Stelle das einfache Hindurchführen des Druckschlauchs 32 im Bereich der Schwenkachse S, vorzugsweise von der hinteren, der Schwenkachse S zugewandten Seitenwand 6e des Deckels 6 zur der Schwenkachse S zugewandten Oberseite des Gehäuses 8 im Bereich des Drehgelenks 10 bzw. der hinteren Garraumwand 4a.

In einer bevorzugten Ausführungsform umfasst die Schlauchdurchführung 34 ein erstes Element 108 und ein zweites Element 110, die eine Durchführung für den Druckschlauch 32 zwischen dem Deckel 6 und dem Gehäuse 8 bilden. Das erste Element 108 ist fest mit dem Deckel 6, insbesondere der hinteren Seitenwand 6e, verbunden und das zweite Element 110 ist fest mit dem Gehäuse 8 verbunden. Das erste Element 108 und das zweite Element 110 sind in axialer Richtung der Schwenkachse S nebeneinander angeordnet und relativ zueinander um die Schwenkachse S drehbar. Aufgrund der Befestigung am Deckel 6 mittels des ersten Elements 108 und am Gehäuse 8 mittels des zweiten Elements 110 sowie der aneinander angrenzenden Anordnung der beiden Elemente 108, 110 kann die Schlauchdurchführung 34 spaltfrei ausgebildet werden, insbesondere einschließlich der Übergänge zum Deckel 6 und zum Gehäuse 8. Hierzu können das erste und das zweite Elemente 108, 110 miteinander in Eingriff stehen. Der Eintritt von Verschmutzungen oder Wasser kann dadurch verhindert werden. Das erste und das zweite Element 108, 110 können manschettenförmig und starr, z.B. aus Metall, ausgebildet sein.

Genauer kann das erste Element 108 einen ersten Befestigungsabschnitt 112 und einen ersten Achsabschnitt 114 aufweisen. Der erste Achsabschnitt 114 ist im Wesentlichen zylindrisch ausgebildet und definiert einen ersten Hohlraum 116 um die Schwenkachse S, ist also im Wesentlichen ringförmig um die Schwenkachse S ausgebildet. Der erste Befestigungsabschnitt 112 kann einen Sockel oder Basisabschnitt des ersten Elements 108 bilden und ist am Deckel 6, insbesondere an der Seitenwand 6e desselben, befestigt. Der erste Befestigungsabschnitt 112 weist eine erste Öffnung 118 durch den ersten Befestigungsabschnitt 112 zwischen dem Deckel 6 und dem ersten Hohlraum 116 auf. Die erste Öffnung 118 erstreckt sich im Wesentlichen senkrecht zur Schwenkachse S.

Analog kann das zweite Element 110 einen zweiten Befestigungsabschnitt 120 und einen zweiten Achsabschnitt 122 aufweisen. Der zweite Achsabschnitt 122 ist im Wesentlichen zylindrisch ausgebildet und definiert einen zweiten Hohlraum 124 um die Schwenkachse S, ist also im Wesentlichen ringförmig um die Schwenkachse S ausgebildet. Der zweite Befestigungsabschnitt 120 kann einen Sockel oder Basisabschnitt des ersten Elements 108 bilden und ist am Gehäuse 8 befestigt. Der zweite Befestigungsabschnitt 120 weist eine zweite Öffnung 126 durch den zweiten Befestigungsabschnitt 120 zwischen dem zweiten Hohlraum 124 und dem Gehäuse 8 auf. Die zweite Öffnung 126 erstreckt sich im Wesentlichen senkrecht zur Schwenkachse S.

Dadurch, dass das erste Element 108 und das zweite Element 110 in axialer Richtung der Schwenkachse S aneinander angrenzen, bilden der erste Hohlraum 116 und der zweite Hohlraum 124 einen gemeinsamen Hohlraum um die Schwenkachse S. Die erste Öffnung 118 und die zweite Öffnung 126 sind in axialer Richtung der Schwenkachse S zueinander versetzt, jedoch lediglich um die Wanddicke des ersten und des zweiten Elements 108, 110 im Bereich der Öffnungen 118, 126. Dadurch wird ermöglicht, dass der Druckschlauch 32 nicht wesentlich in axialer Richtung der Schwenkachse S versetzt bzw. gekrümmt werden muss und es kann ein möglichst steifer und somit druckbeständiger Druckschlauch 32 verwendet werden. Ferner wird durch diese Anordnung sowie durch die gerade Führung des Druckschlauchs 32 von der Lageranordnung 26 zur Schlauchdurchführung 34 im Wesentlichen senkrecht zur Schwenkachse S, wie oben beschrieben, erreicht, dass der Druckschlauch 32 keinen Torsionsmomenten ausgesetzt ist.

Zudem sind die erste und die zweite Öffnung 118, 126 um einen Winkel zueinander versetzt, der vorzugsweise im geöffneten Zustand des Deckels 6 (Fig. 6b) zwischen 135° und 270°, mehr bevorzugt zwischen 160° und 200°, und im geschlossenen Zustand des Deckels 6 (Fig. 6a) etwa 90° beträgt.

Wie in Fig. 6b zu sehen, erfährt der Druckschlauch 32 im geöffneten Zustand des Deckels 6 kaum eine Krümmung, während der Druckschlauch 32 im geschlossenen Zustand des Deckels 6 nach Fig. 6a im gekrümmten Zustand mit einem vorbestimmten Biegeradius angeordnet ist. Der vorbestimmte Biegeradius im geschlossenen Zustand des Deckels kann zwischen 100 mm und 200 mm, vorzugsweise zwischen 130 mm und 170 mm betragen, wodurch ein ausreichend steifer Druckschlauch 32 verwendet werden kann. Zugleich wird bei Verwendung eines Druckschlauchs 32, dessen minimaler Biegeradius kleiner als der vorbestimmte Biegeradius ist, z.B. zwischen 20 mm und 50 mm liegt, und dynamischer Belastung eine erhöhte Lebensdauer erreicht.

Beim Öffnen und Schließen des Deckels 6 wird der Druckschlauch 32 auch in seiner Längsrichtung verschoben. Um diese Bewegung sowie die Biegung des Druckschlauchs 32 zu ermöglichen, sollten der Durchmesser der ersten und der zweiten Öffnung 118 und 126 größer sein als der Durchmesser des Druckschlauchs. Ferner ist in Fig. 6b zu erkennen, dass aufgrund der gewünschten Steifigkeit und Druckbeständigkeit die Krümmung des Druckschlauchs 32 über die Schlauchdurchführung 34 hinausgehen kann. Daher sollten die Abschnitte des Deckels 6 und des Gehäuses 8, die an die Schlauchdurchführung 34 angrenzen, dem Druckschlauch 32 ausreichend Raum für die Krümmung in den vorbestimmten Biegeradius und Bewegungsfreiheit für die Bewegung in Längsrichtung lassen. Weiterhin ist es bevorzugt, dass der Druckschlauch 32 zwischen seinen Enden im Deckel 6, der Schlauchdurchführung 34 und dem Gehäuse 8 nicht festgelegt ist, um entsprechende Ausweichbewegungen vollziehen zu können.

Der Druckschlauch 32 kann sich folglich vom Innenraum 12 des Deckels 6 durch die erste Öffnung 118 in den ersten Hohlraum 116, vom ersten Hohlraum 116 in den zweiten Hohlraum 124 und vom zweiten Hohlraum 124 durch die zweite Öffnung 126 in das Gehäuse 8 erstrecken. Der Druckschlauch 32 ist durch diese Anordnung von der Drehbewegung zwischen Deckel 6 und Gehäuse 8 im Wesentlichen entkoppelt und muss lediglich im Rahmen seiner Flexibilität eine Biegung zwischen dem geöffneten und dem geschlossenen Zustand des Deckels 6 vollziehen. Insbesondere kann der Druckschlauch 32 in die Richtung in die Schlauchdurchführung 34 eintreten und aus dieser austreten, in die er im Deckel 6 und Gehäuse 8 verläuft, sodass es besonders vorteilhaft keiner weiteren Umlenkung des Schlauchs oder Verdrehung des Schlauchs um seine Längsachse bedarf. Dadurch kann ein steiferer und somit druckbeständigerer Druckschlauch 32 verwendet werden.

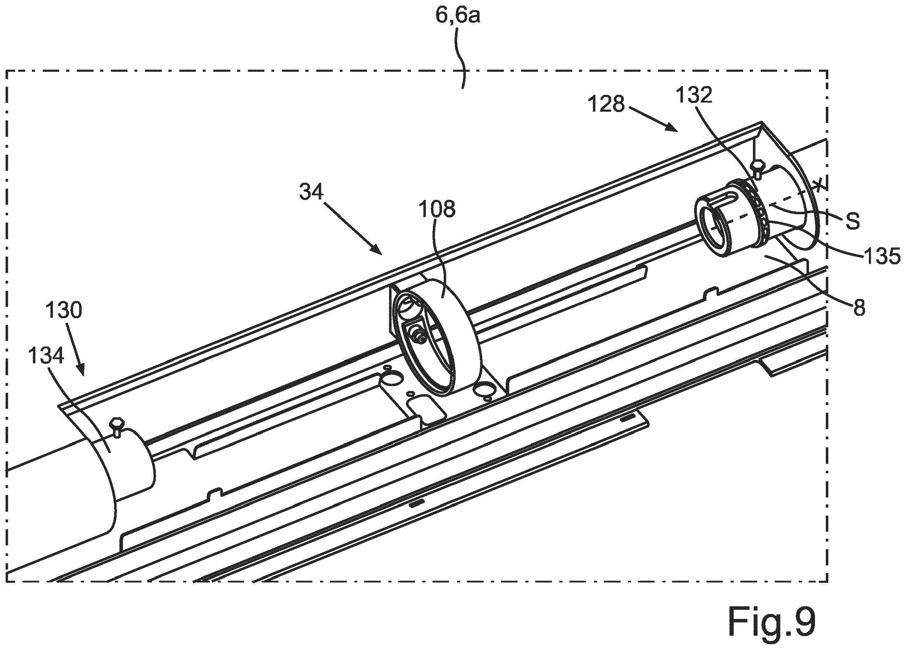

Bevorzugt ist daher die Schlauchdurchführung 34 im Wesentlichen unabhängig vom Drehgelenk 10 zwischen dem Deckel 6 und dem Gehäuse 8 ausgebildet. Fig. 9 zeigt den Bereich des Drehgelenks 10 und der Schlauchdurchführung 34 ohne die in Fig. 3 abgebildete Abdeckung. In dieser Ausführungsform umfasst das Drehgelenk 10 eine erste Lagerstelle 128 und eine zweite Lagerstelle 130, die in axialer Richtung der Schwenkachse S beabstandet zueinander angeordnet sind. An jeder Lagerstelle 128, 130 ist der Deckel 6 schwenkbar gelagert. Hierzu kann die erste Lagerstelle 128 einen ersten Achszapfen 132 und die zweite Lagerstelle 130 einen zweiten Achszapfen 134 umfassen, wobei der erste und der zweite Achszapfen 132, 134 vorzugsweise fest mit dem Deckel 6 verbunden, zum Beispiel verschweißt, sind. Auf jedem Achszapfen 132, 134 kann ein geeignetes Lager angeordnet sein, wie das am Achszapfen 132 angedeutete Wälz- oder Gleitlager 135, das in einer fest mit dem Gehäuse 8 verbundenen Lagerbuchse (nicht dargestellt) aufgenommen ist. Alternative Ausgestaltungen des Drehgelenks 10 sind für den Fachmann ersichtlich.

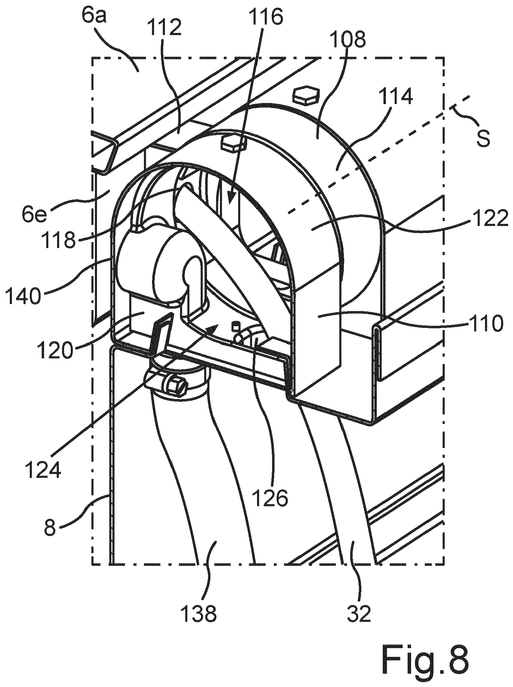

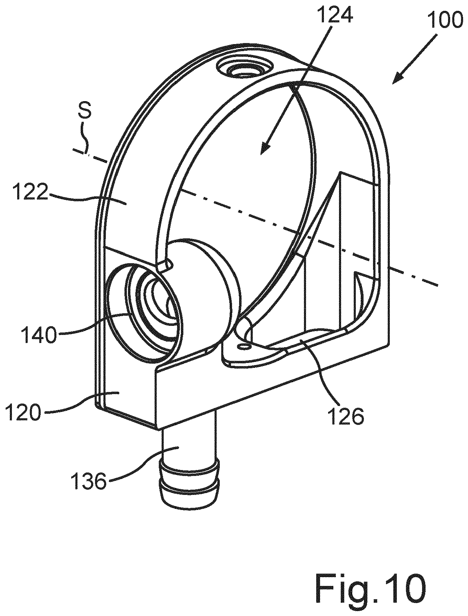

Eine vorteilhafte Ausgestaltung des zweiten Elements 110 der Schlauchdurchführung 34 ist nachfolgend anhand der Figuren 8 und 10 beschrieben. Demnach kann das zweite Element 110 im zweiten Befestigungsabschnitt 120 einen Anschlussstutzen 136 zum Anschluss einer Wasserleitung 138 umfassen und eine Abgabeöffnung 140 zur Wasserabgabe in den Garraum 4 aufweisen. Der Anschlussstutzen 136 und die Abgabeöffnung 140 stehen innerhalb des zweiten Elements 110 in Fluidverbindung, hier durch eine im Wesentlichen L-förmige Durchgangsöffnung. Die Abgabeöffnung 140 ist an einer Außenfläche des zweiten Elements 110 angeordnet, die bei geöffnetem Deckel 6 in Richtung des Garraums bzw. Tiegels 4 gerichtet ist. Die Wasserleitung 138 ist vorzugsweise mit dem (Haus-) Wassernetz verbunden. So kann der Tiegel 4 zur Zubereitung von Speisen, wie zum Beispiel Suppen, mit Wasser gefüllt werden.

Zum Betreiben des Gargeräts 2 können zunächst entsprechende Speisen bzw. Zutaten in den Garraum 4 gegeben werden. Wird das Gargerät 2 zum Braten verwendet, kann der Deckel 6 geöffnet bleiben, ansonsten wird der Deckel 6 in der Regel geschlossen. Das Gargut wird dann im Garraum 4 gegart. Bei dem erfindungsgemäßen Gargerät 2 ist es möglich, dass der Reinigungskopf 18 der Reinigungseinrichtung 16 dauerhaft am Deckel 6 montiert bleibt und sich bei geschlossenem Deckel 6 im Garraum 4 befindet. Vorzugsweise ist der Reinigungskopf 18 dabei oberhalb des vordefinierten maximalen Füllstands Fmax des Gargeräts 2 angeordnet. Ist das Garen beendet, kann das Gargut durch den Nutzer entnommen werden. Daraufhin kann ein Automatisches Reinigen des Garraums 4 mittels der Reinigungseinrichtung 16 erfolgen, das vom Nutzer lediglich zu starten ist, beispielsweise durch Betätigen der Bedien- und Anzeigeeinrichtungen 11 des Gargeräts 2. Ohne jeglichen seitens des Nutzers aufzubringenden Montageaufwand des Reinigungskopfs 18 kann im Anschluss eine vollständige Reinigung des Garraums 4 erfolgen, während der Nutzer sich anderen Küchenarbeiten zuwenden kann.

Das erfindungsgemäße Gargerät 2 ist folglich derart ausgebildet, dass es den Garraum 4 gründlich reinigen kann und den Nutzer erheblich entlastet, da dieser weder Montagearbeiten noch Reinigungsarbeiten ausführen muss. Zugleich weist das Gargerät aufgrund der vorteilhaften Abdichtung der Lageranordnung eine hohe Betriebssicherheit und Langlebigkeit auf.

## Patentansprüche

1. Gewerbliches Gargerät (2) umfassend einen Garraum (4), insbesondere in Form eines Tiegels, einen Deckel (6) zum Verschließen des Garraums (4), und eine Reinigungseinrichtung (16) zum Reinigen des Garraums (4), die als Hochdruckeinrichtung ausgebildet ist und zum Zuführen eines Reinigungsfluids, insbesondere von Wasser, in den Garraum (4) unter Hochdruck eingerichtet ist, wobei die Reinigungseinrichtung (16) einen Reinigungskopf (18) umfasst,
**dadurch gekennzeichnet, dass**
die Reinigungseinrichtung (16) eine Lageranordnung (26) umfasst, mittels welcher der Reinigungskopf (18) am Deckel (6) drehbar gelagert ist und die Lageranordnung (26) umfasst:
einen Lagerkörper (50), wobei innerhalb des Lagerkörpers (50) eine Fluidkammer (80) ausgebildet ist, die mit einer Fluidquelle für das Reinigungsfluid verbunden ist;
eine Drehwelle (48) mit einer ersten Seite und einer der ersten Seite gegenüberliegenden zweiten Seite, die um eine erste Drehachse (D1) drehbar im Lagerkörper (50) gelagert ist und die sich durch die Fluidkammer (80) erstreckt, wobei die Drehwelle (48) in einer axialen Richtung bezüglich der Fluidkammer (80) auf der ersten Seite einen ersten Endabschnitt (48a) aufweist, an dem der Reinigungskopf (18) drehfest gelagert ist;
ein erstes Dichtelement (90) und ein zweites Dichtelement (92), die in axialer Richtung der Drehwelle (48) bezüglich der Fluidkammer (80) auf der zweiten Seite der Drehwelle (48) angeordnet sind und die Drehwelle (48) umgeben, wobei das erste Dichtelement (90) und das zweite Dichtelement (92) in axialer Richtung der Drehwelle (48) beabstandet zueinander angeordnet sind; und
eine Ablassöffnung (96) zwischen dem ersten und dem zweiten Dichtelement (90, 92) zum Abführen von Reinigungsfluid aus einem Zwischenraum zwischen dem ersten und dem zweiten Dichtelement (90, 92).

2. Gewerbliches Gargerät (2) nach Anspruch 1, **dadurch gekennzeichnet, dass** die Ablassöffnung (96) im Wesentlichen senkrecht zur ersten Drehachse (D1) ausgerichtet ist und einen Durchmesser aufweist, der zwischen 1 mm und 4 mm, vorzugsweise zwischen 2 mm und 3 mm beträgt.

3. Gewerbliches Gargerät (2) nach Anspruch 1 oder 2, **dadurch gekennzeichnet, dass** die Drehwelle (48) zumindest im ersten Endabschnitt (48a) als Hohlwelle ausgebildet ist, die einen Zuführkanal (84) aufweist, wobei der Reinigungskopf (18) mindestens eine Austrittsöffnung (20) für das Reinigungsfluid umfasst, und wobei der Zuführkanal (84) mit der Fluidkammer (80) und der mindestens einen Austrittsöffnung (20) in Fluidverbindung steht.

4. Gewerbliches Gargerät (2) nach Anspruch 3, **dadurch gekennzeichnet, dass** die mindestens eine Austrittsöffnung (20) derart um eine zweite Drehachse (D2) drehbar im Reinigungskopf (18) gelagert ist, dass sich eine Drehbewegung des Reinigungskopfs (18) um die erste Drehachse (D1) und eine Drehbewegung der mindestens einen Austrittsöffnung (20) um die zweite Drehachse (D2) überlagern, wobei die zweite Drehachse (D2) die erste Drehachse (D1) schneidet, vorzugsweise unter einem Winkel von 90°.

5. Gewerbliches Gargerät (2) nach einem der Ansprüche 1 bis 4, **dadurch gekennzeichnet, dass** die Lageranordnung (26) weiterhin ein drittes Dichtelement (94) umfasst, das in axialer Richtung der Drehwelle (48) bezüglich der Fluidkammer (80) auf der ersten Seite der Drehwelle (48) angeordnet ist und die Drehwelle (48) umgibt.

6. Gewerbliches Gargerät (2) nach einem der vorangehenden Ansprüche, **dadurch gekennzeichnet, dass** das Gargerät (2) eine Fluidverbindung zwischen der Ablassöffnung (96) und dem Garraum (4) aufweist.

7. Gewerbliches Gargerät (2) nach einem der vorangehenden Ansprüche, **dadurch gekennzeichnet, dass** im Lagerkörper (50) ein Ablasskanal (98) ausgebildet ist, der in Fluidverbindung mit der Ablassöffnung (96) und mit dem Reinigungskopf (18) steht.

8. Gewerbliches Gargerät (2) nach einem der vorangehenden Ansprüche, **dadurch gekennzeichnet, dass** die Lageranordnung (26) einen Stutzen (68) umfasst, der den ersten Endabschnitt (48a) der Drehwelle (48) umgibt, auf dem der Reinigungskopf (18) gelagert ist, und der eine Durchgangsöffnung (70) aufweist, durch die die Drehwelle (48) verläuft und die in Fluidverbindung mit der Ablassöffnung (96) steht.

9. Gewerbliches Gargerät (2) nach Anspruch 7 und 8, **dadurch gekennzeichnet, dass** der Stutzen (68) an dem Lagerkörper (50) angebracht ist und die Durchgangsöffnung (70) des Stutzens (68) in Fluidverbindung mit dem Ablasskanal (98) steht, der in dem Lagerkörper (50) ausgebildet ist.

10. Gewerbliches Gargerät (2) nach Anspruch 8 oder 9, **dadurch gekennzeichnet, dass** eine innere Mantelfläche (70a) der Durchgangsöffnung (70) mindestens eine Nut (106) aufweist, die parallel zur ersten Drehachse (D1) verläuft und eine Fluidverbindung entlang der Drehwelle (48) bereitstellt.

11. Gewerbliches Gargerät (2) nach einem der vorangehenden Ansprüche, **dadurch gekennzeichnet, dass** die Lageranordnung (26) ein Ablauf-Einsatzelement (100) umfasst, das die Ablassöffnung (96) aufweist und in den Lagerkörper (50) eingesetzt ist.

12. Gewerbliches Gargerät (2) nach Anspruch 11, **dadurch gekennzeichnet, dass** das erste und/oder das zweite Dichtelement (92) an dem Ablauf-Einsatzelement (100) dichtend anliegt.

13. Gewerbliches Gargerät (2) nach Anspruch 12, **dadurch gekennzeichnet, dass** das Ablauf-Einsatzelement (100) zumindest einen umlaufenden Sitz (102) zur Aufnahme des ersten bzw. zweiten Dichtelements (90, 92) aufweist.

14. Gewerbliches Gargerät (2) nach einem der vorangehenden Ansprüche, **dadurch gekennzeichnet, dass** die Lageranordnung (26) ein Kammer-Einsatzelement (82) umfasst, das in den Lagerkörper (50) eingesetzt ist und einen Hohlraum aufweist, der die Fluidkammer (80) bildet und die Drehwelle (48) umgibt.

15. Gewerbliches Gargerät (2) nach einem der vorangehenden Ansprüche, **dadurch gekennzeichnet, dass** die Reinigungseinrichtung (16) dazu eingerichtet ist, das Reinigungsfluid unter Hochdruck bereitzustellen, wobei der Hochdruck zwischen 40 bar und 300 bar, vorzugsweise zwischen 60 bar und 250 bar, mehr bevorzugt zwischen 100 bar und 200 bar beträgt.

## Claims

1. Industrial cooking appliance (2) comprising a cooking chamber (4), in particular in the form of a pan, a lid (6) for closing the cooking chamber (4) and a cleaning device (16) for cleaning the cooking chamber (4), which is designed as a high-pressure device and is configured to supply a cleaning fluid, in particular water, into the cooking chamber (4) under high pressure, wherein the cleaning device (16) comprises a cleaning head (18),
**characterized in that**
the cleaning device (16) comprises a bearing arrangement (26), by means of which the cleaning head (18) is rotatably mounted on the lid (6), and the bearing arrangement (26) comprises:
a bearing body (50), wherein a fluid chamber (80) is formed within the bearing body (50) and is connected to a fluid source for the cleaning fluid;
a rotating shaft (48) with a first side and a second side opposite the first side, which is rotatably mounted in the bearing body (50) about a first axis of rotation (D1) and extends through the fluid chamber (80), wherein the rotating shaft (48) has a first end section (48a) on the first side in the axial direction with respect to the fluid chamber (80), to which the cleaning head (18) is non-rotatably mounted;
a first sealing element (90) and a second sealing element (92), which are arranged along the rotating shaft (48) in the axial direction with respect to the fluid chamber (80) on the second side of the rotating shaft (48) and surround the rotating shaft (48), wherein the first sealing element (90) and the second sealing element (92) are spaced apart from one another in the axial direction of the rotating shaft (48); and
an outlet opening (96) between the first and the second sealing element (90, 92) for discharging cleaning fluid from an intermediate space between the first and the second sealing element (90, 92).

2. Industrial cooking appliance (2) according to Claim 1, **characterized in that** the outlet opening (96) is substantially perpendicular to the first axis of rotation (D1) and has a diameter between 1 mm and 4 mm, preferably between 2 mm and 3 mm.

3. Industrial cooking appliance (2) according to Claim 1 or 2, **characterized in that** the rotating shaft (48) is designed as a hollow shaft at least in the first end section (48a), which has a supply channel (84), wherein the cleaning head (18) comprises at least one outlet opening (20) for the cleaning fluid, and wherein the supply channel (84) is in fluidic communication with the fluid chamber (80) and the at least one outlet opening (20).

4. Industrial cooking appliance (2) according to Claim 3, **characterized in that** the at least one outlet opening (20) is rotatably mounted about a second axis of rotation (D2) in the cleaning head (18), such that a rotational movement of the cleaning head (18) about the first axis of rotation (D1) and a rotational movement of the at least one outlet opening (20) about the second axis of rotation (D2) overlap, wherein the second axis of rotation (D2) intersects the first axis of rotation (D1), preferably at an angle of 90°.

5. Industrial cooking appliance (2) according to any one of Claims 1 to 4, **characterized in that** the bearing arrangement (26) further comprises a third sealing element (94), which is arranged in the axial direction of the rotating shaft (48) with respect to the fluid chamber (80) on the first side of the rotating shaft (48) and surrounds the rotating shaft (48).

6. Industrial cooking appliance (2) according to any one of the preceding claims, **characterized in that** the cooking appliance (2) has a fluidic connection between the outlet opening (96) and the cooking chamber (4).

7. Industrial cooking appliance (2) according to any one of the preceding claims, **characterized in that** an outlet channel (98) is formed in the bearing body (50) which is in fluidic communication with the outlet opening (96) and with the cleaning head (18).

8. Industrial cooking appliance (2) according to any one of the preceding claims, **characterized in that** the bearing arrangement (26) comprises a nozzle (68) which surrounds the first end section (48a) of the rotating shaft (48), on which the cleaning head (18) is mounted and which has a passage opening (70) through which the rotating shaft (48) passes and which is in fluidic communication with the outlet opening (96).

9. Industrial cooking appliance (2) according to Claim 7 and 8, **characterized in that** the nozzle (68) is attached to the bearing body (50) and the passage opening (70) of the nozzle (68) is in fluidic communication with the outlet channel (98), which is formed in the bearing body (50).

10. Industrial cooking appliance (2) according to Claim 8 or 9, **characterized in that** an inner surface (70a) of the passage opening (70) has at least one groove (106) which runs parallel to the first axis of rotation (D1) and provides a fluidic connection along the rotating shaft (48).

11. Industrial cooking appliance (2) according to any one of the preceding claims, **characterized in that** the bearing arrangement (26) comprises an outlet insert element (100) which includes the outlet opening (96) and is inserted into the bearing body (50).

12. Industrial cooking appliance (2) according to Claim 11, **characterized in that** the first and/or the second sealing element (92) makes sealing contact with the outlet insert element (100).

13. Industrial cooking appliance (2) according to Claim 12, **characterized in that** the outlet insert element (100) has at least one circumferential seat (102) for receiving the first or second sealing element (90, 92).

14. Industrial cooking appliance (2) according to any one of the preceding claims, **characterized in that** the bearing arrangement (26) comprises a chamber insert element (82) which is inserted into the bearing body (50) and has a cavity that forms the fluid chamber (80) and surrounds the rotating shaft (48).

15. Industrial cooking appliance (2) according to any one of the preceding claims, **characterized in that** the cleaning device (16) is configured to supply the cleaning fluid under high pressure, wherein the high pressure is between 40 bar and 300 bar, preferably between 60 bar and 250 bar, more preferably between 100 bar and 200 bar.

## Revendications

1. Appareil de cuisson professionnel (2) comprenant un espace de cuisson (4), en particulier sous la forme d'un creuset, un couvercle (6) pour fermer l'espace de cuisson (4), et un dispositif de nettoyage (16) pour nettoyer l'espace de cuisson (4), qui est réalisé sous la forme d'un dispositif à haute pression et qui est conçu pour amener un fluide de nettoyage, en particulier de l'eau, dans l'espace de cuisson (4) sous haute pression, le dispositif de nettoyage (16) comprenant une tête de nettoyage (18),
**caractérisé en ce que**
le dispositif de nettoyage (16) comprend un agencement de palier (26), au moyen duquel la tête de nettoyage (18) est montée de manière rotative sur le couvercle (6), et l'agencement de palier (26) comprend :
un corps de palier (50), une chambre à fluide (80) étant formée à l'intérieur du corps de palier (50), laquelle est reliée à une source de fluide pour le fluide de nettoyage ;
un arbre rotatif (48) ayant un premier côté et un deuxième côté opposé au premier côté, qui est monté dans le corps de palier (50) de manière à pouvoir tourner autour d'un premier axe de rotation (D1) et qui s'étend à travers la chambre à fluide (80), l'arbre rotatif (48) présentant, dans une direction axiale par rapport à la chambre à fluide (80), sur le premier côté, une première partie d'extrémité (48a) sur laquelle la tête de nettoyage (18) est montée de manière fixe en rotation ;
un premier élément d'étanchéité (90) et un deuxième élément d'étanchéité (92) qui sont disposés dans la direction axiale de l'arbre rotatif (48) par rapport à la chambre à fluide (80) sur le deuxième côté de l'arbre rotatif (48) et qui entourent l'arbre rotatif (48), le premier élément d'étanchéité (90) et le deuxième élément d'étanchéité (92) étant disposés à distance l'un de l'autre dans la direction axiale de l'arbre rotatif (48) ; et
un orifice de vidange (96) situé entre le premier et le deuxième élément d'étanchéité (90, 92) pour évacuer le fluide de nettoyage d'un espace entre le premier et le deuxième élément d'étanchéité (90, 92).

2. Appareil de cuisson professionnel (2) selon la revendication 1, **caractérisé en ce que** l'orifice de vidange (96) est orienté sensiblement perpendiculairement au premier axe de rotation (D1) et présente un diamètre qui est compris entre 1 mm et 4 mm, de préférence entre 2 mm et 3 mm.

3. Appareil de cuisson professionnel (2) selon la revendication 1 ou la revendication 2, **caractérisé en ce que** l'arbre rotatif (48) est conçu, au moins dans la première partie d'extrémité (48a), sous forme d'un arbre creux qui présente un canal d'alimentation (84), la tête de nettoyage (18) comprenant au moins un orifice de sortie (20) pour le fluide de nettoyage, et le canal d'alimentation (84) étant en communication fluidique avec la chambre à fluide (80) et avec ledit au moins un orifice de sortie (20).

4. Appareil de cuisson professionnel (2) selon la revendication 3, **caractérisé en ce que** ladite au moins une ouverture de sortie (20) est montée dans la tête de nettoyage (18) de manière à pouvoir tourner autour d'un deuxième axe de rotation (D2) de telle sorte qu'un mouvement de rotation de la tête de nettoyage (18) autour du premier axe de rotation (D1) et un mouvement de rotation de ladite au moins une ouverture de sortie (20) autour du deuxième axe de rotation (D2) se superposent, le deuxième axe de rotation (D2) coupant le premier axe de rotation (D1), de préférence selon un angle de 90°.

5. Appareil de cuisson professionnel (2) selon l'une des revendications 1 à 4, **caractérisé en ce que** l'agencement de palier (26) comprend en outre un troisième élément d'étanchéité (94) disposé dans la direction axiale de l'arbre rotatif (48) par rapport à la chambre à fluide (80) sur le premier côté de l'arbre rotatif (48) et entourant l'arbre rotatif (48).

6. Appareil de cuisson professionnel (2) selon l'une des revendications précédentes, **caractérisé en ce que** l'appareil de cuisson (2) comporte une communication fluidique entre l'orifice de vidange (96) et l'espace de cuisson (4).

7. Appareil de cuisson professionnel (2) selon l'une des revendications précédentes, **caractérisé en ce qu'**un canal de vidange (98) est formé dans le corps de palier (50), lequel est en communication fluidique avec l'orifice de vidange (96) et avec la tête de nettoyage (18) .

8. Appareil de cuisson professionnel (2) selon l'une des revendications précédentes, **caractérisé en ce que** l'agencement de palier (26) comprend une tubulure (68) qui entoure la première partie d'extrémité (48a) de l'arbre rotatif (48) sur laquelle est montée la tête de nettoyage (18), et qui présente une ouverture de passage (70) à travers laquelle passe l'arbre rotatif (48) et qui est en communication fluidique avec l'orifice de vidange (96) .

9. Appareil de cuisson professionnel (2) selon les revendications 7 et 8, **caractérisé en ce que** la tubulure (68) est montée sur le corps de palier (50) et l'ouverture de passage (70) de la tubulure (68) est en communication fluidique avec le canal de vidange (98) formé dans le corps de palier (50).

10. Appareil de cuisson professionnel (2) selon la revendication 8 ou la revendication 9, **caractérisé en ce qu'**une surface d'enveloppe intérieure (70a) de l'ouverture de passage (70) présente au moins une rainure (106) qui s'étend parallèlement au premier axe de rotation (D1) et fournit une communication de fluide le long de l'arbre de rotation (48).

11. Appareil de cuisson professionnel (2) selon l'une des revendications précédentes, **caractérisé en ce que** l'agencement de palier (26) comprend un élément insérable de vidange (100) qui présente l'orifice de vidange (96) et qui est inséré dans le corps de palier (50).

12. Appareil de cuisson professionnel (2) selon la revendication 11, **caractérisé en ce que** le premier et/ou le deuxième élément d'étanchéité (92) s'applique de manière étanche contre l'élément insérable de vidange (100) .

13. Appareil de cuisson professionnel (2) selon la revendication 12, **caractérisé en ce que** l'élément insérable de vidange (100) présente au moins un siège périphérique (102) pour recevoir le premier ou le deuxième élément d'étanchéité (90, 92).

14. Appareil de cuisson professionnel (2) selon l'une des revendications précédentes, **caractérisé en ce que** l'agencement de palier (26) comprend un élément d'insertion (82) de chambre inséré dans le corps de palier (50) et présentant une cavité formant la chambre à fluide (80) et entourant l'arbre rotatif (48).

15. Appareil de cuisson professionnel (2) selon l'une des revendications précédentes, **caractérisé en ce que** le dispositif de nettoyage (16) est adapté pour fournir le fluide de nettoyage sous haute pression, la haute pression étant comprise entre 40 bars et 300 bars, de préférence entre 60 bars et 250 bars, de façon encore préférée entre 100 bars et 200 bars.
